(19) Europäisches Patentamt
European Patent Office
Office européen des brevets

(11) **EP 3 772 493 A1**

(12) **EUROPÄISCHE PATENTANMELDUNG**

(43) Veröffentlichungstag:
**10.02.2021 Patentblatt 2021/06**

(51) Int Cl.:
***C03C 21/00*** *(2006.01)*

(21) Anmeldenummer: **20186868.4**

(22) Anmeldetag: **21.07.2020**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **05.08.2019 DE 102019121147**

(71) Anmelder: **SCHOTT AG
55122 Mainz (DE)**

(72) Erfinder:
• **DIETRICH, Rüdiger
07745 Jena (DE)**
• **WEISSHUHN, Julia
55122 Mainz (DE)**
• **DJORDJEVIC-REISS, Jovana
55128 Mainz (DE)**

(74) Vertreter: **Blumbach · Zinngrebe Patentanwälte
PartG mbB
Alexandrastraße 5
65187 Wiesbaden (DE)**

(54) **SCHEIBENFÖRMIGER, CHEMISCH VORGESPANNTER GLASARTIKEL UND VERFAHREN ZU DESSEN HERSTELLUNG**

(57)    Die Erfindung betrifft scheibenförmige, chemisch vorgespannte Glasartikel sowie ein Verfahren zur Herstellung solcher chemisch vorgespannten Glasartikel.

Fig. 1

EP 3 772 493 A1

**Beschreibung**

Die Erfindung betrifft scheibenförmige, chemisch vorgespannte Glasartikel sowie ein Verfahren zur Herstellung solcher chemisch vorgespannten Glasartikel.

Gebiet der Erfindung

Bekannte chemisch vorspannbare Gläser und/oder chemisch vorspannbare oder chemisch vorgespannte Glasartikel und/oder Verfahren zu Herstellung solcher Artikel sind beispielsweise beschrieben in der Patentfamilie zur US 2019/0016632 A1 mit einem bereits erteilten US-amerikanischen Patent US 9,593,42 B2 als Familienmitglied, der Patentfamilie zur US 2018/0057401 A1 mit einem bereits erteilten US-amerikanischen Patent US 10,294,151 B2 als Familienmitglied, der Patentfamilie zur US 2018/0029932 A1 mit einem bereits erteilten US-amerikanischen Patent US 10,259,746 B2 als Familienmitglied, der Patentfamilie zur US 2017/0166478 A1 mit einem bereits erteilten US-amerikanischen Patent US 9,908,811 B2 als Familienmitglied, der US 9,908,811 B2, der Patentfamilie zur US 2016/0122240 A1 mit einem bereits erteilten US-amerikanischen Patent US 10,239,784 B2 als Familienmitglied, der Patentfamilie zur US 2016/0122239 A1 mit einem bereits erteilten US-amerikanischen Patent US 10,150,698 B2 als Familienmitglied, der Patentfamilie zur US 2017/0295657 A1 mit einem bereits erteilten US-amerikanischen Patent US10,271,442 B2 als Familienmitglied, der Patentfamilie zur US 2010/0028607 A1 mit einem bereits erteilten US-amerikanischen Patent US 8,312,739 B2 als Familienmitglied, der Patentfamilie zur US 2013/0224492 A1 mit einem bereits erteilten US-amerikanischen Patent US 9,359,251 B2 als Familienmitglied, der Patentfamilie zur US 2016/0023944 A1 mit einem bereits erteilten US-amerikanischen Patent US 9,718,727 B2 als Familienmitglied, der Patentfamilie zur US 2012/0052271 A1 mit einem bereits erteilten Familienmitglied US 10,227,253 B2, der Patentfamilie zur US 2015/0030840 A1 mit einem bereits erteilten US-amerikanischen Patent US 10,227,253 B2 als Familienmitglied, der Patentfamilie zur US 2014/0345325 A1, der Patentfamilie zur US 2016/0257605 A1 mit einem bereits erteilten US-Patent US 9,487,434 B2 als Familienmitglied, der Patentfamilie zur US 2015/0239776 A1 it einem bereit erteilten US-Patent US 9,517,968 B2 als Familienmitglied, der Patentfamilie zur US 2015/0259244 A1 mit einem bereits erteilten US-amerikanischen Patent US 9,567,254 B2 als Familienmitglied, der Patentfamilie zur US 2017/0036952 A1 mit einem bereits erteilten US-amerikanischen Patent US 9,676,663 B2 als Familienmitglied, der Patentfamilie zur US 2018/0002223 A1 mit einem bereits erteilten US-amerikanischen Patent US 10,266,447 B2 als Familienmitglied, der Patentfamilie zur US 2017/0129803 A1 mit einem bereits erteilten US-amerikanischen Patent US 9,517,968 B2, der Patentfamilie zur US 2016/0102014 A1 mit einem bereits erteilten US-amerikanischen Patent US 10,266,447 B2 als Familienmitglied, der Patentfamilie zur US 2015/0368153 A1 mit einem bereits erteilten US-amerikanischen Patent US 9,676,663 B2 als Familienmitglied, der Patentfamilie zur US 2015/0368148 A1 mit einem bereits erteilten US-amerikanischen Patent US 9,902,648 B2 als Familienmitglied, der Patentfamilie zur US 2015/0239775 A1 mit einem bereits erteilten US-amerikanischen Patent US 10,118,858 B2, der US 9,908,812 B2, der Patentfamilie zur US 2016/0264452 A1 und dem bereits erteilten US-Patent US 9,902,648 B2, der Patentfamilie zur US 2016/ 102011 A1 und dem bereits erteilten US-Patent US 9,593,042 B2, der Patentfamilie zur WO 2012/126394 A1, der Patentfamilie zur US 2014/0308526 A1 und dem bereits erteilten US-amerikanischen Patent US 9,540,278 B2, der Patentfamilie zur US 2011/0294648 A1 und dem bereits erteilten US-amerikanischen Patent US 8,759,238 B2, der Patentfamilie zur US 2010/0035038 A1 und dem bereits erteilten US-amerikanischen Patent US 8,075,999 B2, der Patentfamilie zur US 4,055,703, der Patentfamilie zur DE 10 2010 009 584 A1, dem erteilten deutschen Patent DE 10 2010 009 584 B4 und der US-amerikanischen Anmeldung US 2016/0347655 A1 mit dem bereit erteilten US-amerikanischen Patent US10351471 B2, der Patentfamilie zur CN 102690059 A und dem bereits erteilten chinesischen Patent CN 102690059 B, der Patentfamilie zur US2016/0356760 A1 und dem bereits erteilten US-amerikanischen Patent US 10,180,416 B2, der Patentfamilie zur WO 2017/049028 A1 mit dem bereits erteilten US-amerikanischen Schutzrecht US 9,897,574 B2 als Familienmitglied, der Patentfamilie zur WO 2017/087742 A1, der Patentfamilie zur US 2017/0291849 A1 und dem bereits erteilten US-amerikanischen Patent US 10,017,417 B2, der Patentfamilie zur US 2017/0022093 A1 und dem bereits erteilten US-amerikanischen Patent US 9,701,569 B2, der Patentfamilie zur US2017300088 (A1) und dem erteilten US-amerikanischen Patent US 9,977,470 B2, der Patentfamilie zur EP 1 593 658 A1, der erteilten europäischen Patent EP 1 593 658 B1 sowie der US-amerikanischen Anmeldung US 2005/0250639 A1 und der Patentfamilie zur US 2018/0022638 A1 und dem bereits erteilten US-amerikanischen Patent US 10,183,887 B2. Dabei können chemisch vorspannbare Gläser unterschieden werden in sogenannte Aluminium-Silikatgläser (auch bezeichnet als AS-Gläser, Alumosilikatgläser oder Aluminosilikatgläser), welche als Komponenten insbesondere $Al_2O_3$ und $SiO_2$ sowie Alkalioxide außer Lithiumoxid $Li_2O$ umfassen, sowie Lithium-Aluminium-Silikatgläser (auch bezeichnet als LAS-Gläser, Lithium-Alumosilikatgläser oder Lithium-Aluminosilikatgläser), welche weiterhin noch $Li_2O$ als Komponente umfassen.

Weitere Dokumente des Standes der Technik finden sich in der Patentfamilie zur US 2019/0152838 A1, der Patentfamilie zur US 2013/0122284 A1 und dem bereits erteilten US-amerikanischen Patent US 9,156,724 B2, der Patentfamilie zur US 2015/0079400 A1 mit dem bereits erteilten US-Schutzrecht US 9,714,188 B2, in der Patentfamilie zur US 2015/0099124 A1 und dem bereits erteilten US-amerikanischen Patent US 9,701,574 B2, der Patentfamilie zur WO 2019/085422 A1, der Patentfamilie zur US 2017/0197869 A1 und dem bereits erteilten US-amerikanischen Patent US 10,131,567 B2, der Patentfamilie zur US 2015/0030840 A1 und dem bereits erteilten US-amerikanischen Schutzrecht US 10,227,253 B2, der Patentfamilie zur US 2015/0140325 A1 und dem bereits erteilten US-amerikanischen Schutzrecht US 10,125,044 B2, der Patentfamilie zur US 2015/0118497 A1 und dem bereits erteilten US-amerikanischen Schutzrecht US 9,822,032 B2, der Schutzrechtsfamilie zur US 2012/0135852 A1 und dem bereits erteilten US-amerikanischen Schutzrecht US 8,796,165 B2, der Schutzrechtsfamilie zur US 2015/0147575 A1 und dem bereits erteilten US-amerikanischen Patent US 10,000,410 B2 sowie in der Schutzrechtsfamilie zur US 2015/0376050 A1 und dem bereits erteilten US-amerikanischen Patent US 9,783,451 B2.

Scheibenförmige Glasartikel werden häufig als Abdeckplatten (sogenannte cover- oder Schutzgläser) im Bereich elektronischer Geräte verwendet, nämlich für den Schutz von Mobilgeräten wie Smartphones und/oder Tablet-PCs. Glas bietet hierbei zwar den Vorteil einer sehr guten Transparenz im optischen Spektralbereich sowie einer gegenüber transparenten Kunststoffen verbesserten Kratzbeständigkeit. Allerdings sind solche elektronischen Geräte im Alltag durchaus hohen Verschleißbelastungen ausgesetzt. Außerdem ist Glas im Vergleich zu transparenten Kunststoffen ein sprödes Material, welches zu Bruch neigt. Um die Verschleißfestigkeit von scheibenförmigen Gläsern weiter zu verbessern, werden diese häufig vorgespannt, wobei gerade bei sehr dünnen Gläsern häufig eine chemische Vorspannung gewählt wird. Auf diesen Weise kann die Verschleißbeständigkeit nochmals verbessert werden. Für den Schutz von Mobilgeräten kommen dabei nur solche scheibenförmigen Glasartikel in Frage, welche sehr hoch vorgespannt sind.

Unter Verschleißbelastungen werden im Rahmen der vorliegenden Schrift solche Belastungen verstanden, welche zu Beschädigungen des scheibenförmigen Glasartikels führen können. Darunter zählen beispielsweise Abriebbelastungen, wie ein Reiben, Kratzbelastungen, welche beispielsweise durch den Kontakt mit einem spitzen Gegenstand entstehen, insbesondere, wenn dieser Gegenstand über die Oberfläche des scheibenförmigen Glasartikels bewegt wird, und Stoßbelastungen, welche beispielsweise beim Fallen des scheibenförmigen Glasartikels auf den Boden auftreten.

Im Rahmen der vorliegenden Offenbarung werden die Begriffe der Verschleißfestigkeit und der Festigkeit, sofern nicht ausdrücklich anders erwähnt, weitgehend synonym als Oberbegriff für die Beständigkeit eines Materials bzw. eines Erzeugnisses gegenüber mechanischen Angriffen verwendet. Im Rahmen der vorliegenden Offenbarung werden spezielle Festigkeiten, beispielsweise die Set-Drop-Festigkeit oder die Biegefestigkeit (auch: Biegezugfestigkeit), als Unterfälle der (Gesamt-)Festigkeit eines Materials bzw. Erzeugnisses oder Artikels verstanden.

Es hat sich gezeigt, dass die realen Belastungen, denen ein scheibenförmiger Glasartikel ausgesetzt ist, nur unzureichend durch eine isolierte Betrachtung von Abrieb, Kratz- und/oder Stoßbelastungen beschrieben und simuliert werden können. So treten unter realen Bedingungen tatsächlich Belastungen auf, in welchen beispielsweise ein Abrieb an einer Oberfläche mit spitzen Partikeln erfolgen kann, und beispielsweise ist auch die Stoßbelastung, welche beim Fallen eines Prüfkörpers auf einen scheibenförmigen Glasartikel zur Bestimmung einer Stoßfestigkeit erfolgt, nur teilweise, falls überhaupt, vergleichbar mit der Belastung, die auftritt, wenn ein verbauter scheibenförmiger Glasartikel auf eine Oberfläche fällt.

Beachtlich hinsichtlich der Festigkeit eines Erzeugnisses, wie beispielsweise eines Glasartikels, ist also, dass die mechanische Festigkeit eines Erzeugnisses nicht nur vom Material abhängt, sondern insbesondere auch von der Art der Beanspruchung. So weisen bekannte chemisch vorgespannte Glasartikel beispielsweise eine hohe Biegefestigkeit, beispielsweise bestimmt in einer Vier-Punkt-Biegung, oder eine hohe Impaktfestigkeit, beispielsweise bestimmt in einem sogenannten Kugelfalltest ("blunt impact" Stoßbelastung mit runden Gegenständen), oder eine hohe Festigkeit bei einem sogenannten "sharp impact" (Stoßbelastung mit spitzwinkligen Gegenständen) auf. Ein sehr wichtiger Test für mobile Endgeräte ist beispielsweise der sogenannte Set-Drop-Test. Bei diesem Test handelt es sich um eine Untersuchung, bei welcher Belastungen von Glasartikeln, wie sie in realen Anwendungen auftreten können, untersucht werden. Hierfür wird ein Glasartikel in der Form verbaut, wie er beispielsweise in einem späteren mobilen Gerät, wie einem Smartphone, verbaut werden würde. Es wird somit ein Modell eines Endgeräts, beispielsweise das Modell eines Smartphones, gebaut, bei welchem der Glasartikel, beispielsweise verwendet als Displayabdeckung, zum Einsatz kommt. Das Gewicht des Modells entspricht dabei weitgehend dem eines tatsächlichen Endgeräts, ebenso wie der Einbau des Glasartikels, jedoch ohne die Verwendung entsprechender Bauteile. Das Modell wird dann mit dem Glasartikel nach unten auf eine Oberfläche fallen gelassen, welche beispielsweise Partikel mit kleinen Krümmungsradien umfasst. Solche Tests sollen somit reale Beanspruchungen simulieren, beispielsweise wenn ein Smartphone auf Asphalt oder Beton fällt. Dabei ist allgemein bekannt, dass rauer Untergrund, also Untergrund aus welchem spitze Steinchen oder Sandkörner herausragen, sehr kritisch für die Unversehrtheit eines Schutzglases für mobile Endgeräte ist. Beispielsweise unterscheiden sich Fallhöhen mit den beschriebenen glasbestückten Dummys deutlich, wenn sie auf glatte Oberflächen - wie Granit - oder auf mit Sandpapier beklebte raue Oberflächen, wie einem mit Sandpapier beklebten Granit, fallen. Fallhöhen mit rauem Untergrund, simuliert durch mit Sandpapier beklebtem Granit, sind kleiner als Fallhöhen auf glattem Untergrund. Alternative Tests, mit welchen solche "sharp impact"-Festigkeiten untersucht werden, sind beispielsweise sogenannte "sandpaper ball drop tests". Beispielsweise beschreibt die US-amerikanische Patentanmeldung US 2015/0239775 A1 einen beispielhaften Aufbau eines Sandpapierkugelfalltests.

Gläser, bzw. scheibenförmige Glasartikel, die als Schutzgläser für mobile Endgeräte geeignet sind, sind so ausgestaltet, dass sie vorspannbar, insbesondere chemisch vorspannbar, sind. Unter einem Glas, welches chemisch vorspannbar ist, wird im Rahmen der vorliegenden Offenbarung ein Glas verstanden, welches einem Ionenaustausch-prozess zugänglich ist. In einem solchen Prozess werden in einer Oberflächenschicht eines Glasartikels, wie beispielsweise einer Glasscheibe, Ionen von Alkalimetallen ausgetauscht. Dies erfolgt derart, dass in der Oberflächenschicht nunmehr eine Druckspannungszone aufgebaut wird, was durch den Austausch von Ionen mit kleineren Radien durch Ionen mit größeren Radien erzielt wird. Dazu wird der Glasartikel in ein sogenanntes Ionenaustauschbad, beispielsweise eine Salzschmelze, eingetaucht, wobei das Ionenaustauschbad die Ionen mit den größeren Ionenradien umfasst, insbesondere Kalium- und/oder Natriumionen, sodass diese in die Oberflächenschicht des Glasartikels migrieren. Im Austausch dafür wandern Ionen mit geringeren Ionenradien, insbesondere Lithium- und/oder Natriumionen, aus der Oberflächenschicht des Glasartikels in das Ionenaustauschbad.

Dadurch bildet sich eine Druckspannungszone aus. Diese kann durch die kennzeichnenden Größen der Druckspannung, welche auch als "compressive stress" oder abgekürzt "CS" bezeichnet wird, und die Druckspannungstiefe, die auch als "Depth of Layer" oder abgekürzt "DoL" bezeichnet wird, beschrieben werden. Diese Druckspannungstiefe DoL ist dem Fachmann hinlänglich bekannt und bezeichnet im Rahmen der vorliegenden Offenbarung diejenige Tiefe, bei der die Spannungskurve den Spannungsnulldurchgang hat. Alternativ oder zusätzlich kann diese DoL mittels eines spannungsoptischen Nulldurchgangsmessverfahrens, beispielsweise mittels eines Messgerätes mit der Handelsbezeichnung FSM-6000 (dieses bestimmt nur die "hypothetische" K DoL) oder SLP 1000 (dieses Gerät bestimmt die "eigentliche" DoL) bestimmt werden.

kann für Lithium-Aluminium-Silikatgläser und für Alumosilikatgläser ebenfalls die Druckspannung der Oberfläche sowie die maximale Druckspannung CS einer Scheibe oder eines scheibenförmigen Glasartikels ermittelt werden. Mit dem SLP wird die "hypothetische" Na CS bestimmt oder die Na CS 30, also die Druckspannung bei der Tiefe 30 $\mu$m.

Die vorgenannten Lithium-Aluminium-Silikatgläser und die Alumosilikatgläser sind bekannte Glastypen, die in der Regel hervorragend chemisch vorspannbar sind.

Alumosilikatgläser werden im Rahmen der vorliegenden Offenbarung auch als "AS-Gläser" bezeichnet. Lithium-Alumosilikatgläser werden im Rahmen der vorliegenden Offenbarung auch als "LAS-Gläser" bezeichnet. Andere Bezeichnungen für AS-Gläser sind beispielsweise Aluminosilikatgläser oder Aluminiumsilikatgläser; in entsprechender Weise werden LAS-Gläser auch als "Lithium-Aluminosilikatgläser" oder "Lithium-Aluminiumsilikatgläser" bezeichnet.

Hinsichtlich der Zusammensetzungen dieser beiden Glastypen AS-Glas und LAS-Glas umfassen Alumosilikatgläser Siliciumoxid $SiO_2$ und Aluminiumoxid $Al_2O_3$ als Komponenten sowie Alkalioxide außer Lithiumoxid $Li_2O$, Lithium-Alumosilikatgläser neben Aluminiumoxid und Siliciumoxid weiterhin noch Lithiumoxid $Li_2O$. Ein Unterschied zwischen den hier als "Alumosilikatgläsern" und als "Lithium-Alumosilikatgläsern" bezeichneten Gläsern ist also, dass die Lithium-Alumosilikatgläser $Li_2O$ umfassen, die Alumosilikatgläser aber nicht. Neben den vorgenannten Komponenten umfasst das Glas zumeist noch weitere Komponenten.

Üblicherweise werden bei hoch vorspannbaren Gläsern (nur diese kommen beispielsweise als Schutzgläser für Mobilgeräte mit hohen Anforderungen an verschiedene Festigkeitsansprüche in Frage) hohe Werte für die Druckspannung (zwischen 700 MPa und 1000 MPa) erzielt bei Druckspannungstiefen zwischen 40 $\mu$m und 200 $\mu$m. Kommt es zu einem Austausch nicht nur von einem Ion, sondern zu einem kombinierten Austausch beispielsweise von Kalium-Ionen und Natrium-Ionen, wie dies in der Regel bei LAS-Gläsern der Fall ist, werden die die Druckspannung charakterisierenden Größen CS und DoL häufig auch bezogen auf die jeweilige Komponente bzw. Ionen angegeben, also beispielsweise die durch den Austausch von Kalium resultierende Druckspannung als "CS Kalium" und die entsprechende Druckspannungstiefe als "Kalium-DoL" oder Kalium-Druckspannungstiefe.

Die Druckspannungstiefe wird, wenn sie auf die jeweiligen ausgetauschten Komponenten bzw. Ionen bezogen angegeben wird, auch als sogenannte "Austauschtiefe" bezeichnet. Im Rahmen der vorliegenden Offenbarung werden die Begriffe der Austauschtiefe, der Druckspannungstiefe und der DoL als Synonyme verwendet.

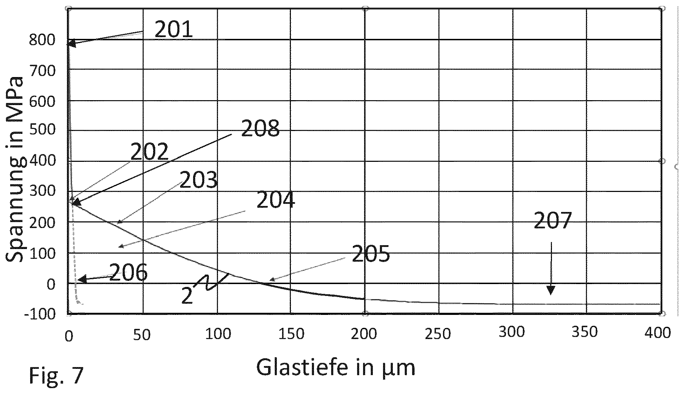

Hierbei ist jedoch beachtlich, dass auch die Begriffe der "Kalium-DoL" oder der "Natrium-DoL" gebräuchlich sind. Hierbei handelt es sich an sich jedoch bei der Kalium-DoL um einen an sich hypothetischen Wert. Die Natrium-DoL und die DoL wiederum sind identisch, genauso wie Kalium-CS und CS identische sind. Beispielsweise wird als "Kalium-DoL" oder "Kalium-Austauschtiefe" der Wert bezeichnet, der sich durch Verlängern der durch den Kalium-Austausch erhaltenen Druckspannungskurve mit dem Schnittpunkt der X-Achse ergibt. Sofern daher auf die "Kalium-DoL abgestellt wird, handelt es sich daher im Rahmen der vorliegenden Offenbarung um diesen wie vorstehend beschrieben zu ermittelnden oder ermittelten Wert, der jedoch an sich hypothetisch ist. Die bei vorgespannten Gläsern mit zusammengesetztem Spannungsprofil üblicherweise verwendeten Begriffe werden auch in der nachfolgenden Fig. 7 anhand eines beispielhaften Spannungsprofils erläutert.

Gegenüber den AS-Gläsern sind LAS-Gläser vorteilhaft, da mit ihnen schneller höhere Druckspannungstiefen erzielt werden können. Die Druckspannungstiefe wird dabei angegeben als der Wert, bei welchem die Spannungskurve den Wert 0 MPa aufweist, ist also im Spannungsdiagramm durch den Durchgang der Spannungskurve bei 0 gekennzeichnet. Die Druckspannungstiefe beträgt bei LAS-Gläsern schon bei Prozesszeiten von 1 bis 3 Stunden in der Regel

mindestens 100 μm oder mehr.

Auch bei AS-Gläsern sind zwar hohe Druckspannungstiefen möglich, beispielsweise von bis zu 125 μm oder mehr. Allerdings muss bei solchen Gläsern dann eine sehr hohe Vorspanntemperatur von 450°C oder mehr und/oder sehr lange Vorspannzeiten von 8 Stunden oder mehr gewählt werden, um solche Druckspannungstiefen zu erreichen. LAS-Gläser bieten demgegenüber den Vorteil, dass hohe Werte für die Druckspannung und die Druckspannungstiefe bei deutlichen günstigeren Bedingungen erreicht werden können, also bei niedrigeren Temperaturen und/oder geringeren Austauschzeiten.

Die messtechnische Ermittlung der Werte für die Druckspannung und die Druckspannungstiefe erfolgt mit marktüblichen Geräten, wie beispielsweise dem Geräte FSM 6000 für die Ermittlung der durch den Austausch von Kalium erzielten Druckspannung (Kalium CS) und Druckspannungstiefe (Kalium-DoL) sowie beispielsweise dem Gerät SLP 1000 für die Ermittlung der mit dem Austausch von Natrium erzielten charakteristischen Werte für die Spannung, insbesondere den Wert der durch Natriumaustausch erzielten Druckspannung bei einer Tiefe von 30 μm (auch abgekürzt als "Na CS 30") und die mit Natrium erzielten Druckspannungstiefe (Natrium-DoL). Diese Geräte werden von der Firma Orihara Ltd. angeboten.

Mit solcherart vorgespannten Glasartikeln werden hohe mechanische Festigkeiten - sowohl Biegezugfestigkeiten (z.B. Doppelringmethode DIN/EN 1288-5 oder DIN EN 61747-5-3) oder Impaktfestigkeiten (z.B. Kugelfallfestigkeiten) erzielt.

Es ist Stand der Technik, dass neben den klassischen Druckspannungsparametern CS und DoL auch die Zugspannung festigkeitsrelevant ist, wie auch dem Stand der Technik wie vorstehend ausgeführt entnommen werden kann. Hierbei hat sich gezeigt, dass bei zu hohen Druckspannungsintegralen - welche entsprechend auch sehr große Zugspannungsintegrale zur Folge haben, da die in die Oberfläche eingebrachte Druckspannung eines Glasartikels, welche durch einen Vorspannprozess resultiert, gleich groß ist wie die im Innern des Glasartikels resultierende Zugspannung - der Festigkeitszuwachs stagniert oder sogar rückläufig sein kann. Dies ist darauf zurückzuführen, dass die Rissausbreitung stärker getriggert wird bzw. der Glasbruch bei Festigkeitsversuchen, wie beispielsweise einer Vier-Punkt Biegung oder einem Test, bei welchem die Sharp-impact-Festigkeit untersucht wird, wie beispielsweise einem sogenannten Set-Drop-Test, früher stattfindet. Das gilt insbesondere, wenn die DoL entsprechend klein ist. Bei ungefähr gleicher DoL und nicht zusammengesetztem, also einem nicht hinsichtlich der speicherbaren Zugspannung optimierten Vorspannprotokoll bzw. Vorspannverfahren gilt das allerdings auch. Dies kann beispielsweise auch der nachfolgenden Tabelle entnommen werden:

| Glastyp | TS/d in [MPa] | K CS [MPa] | K DoL [μm] | Na CS 30 [MPa] | DoL [μm] | set drop #60 [cm] |
|---------|---------------|------------|------------|----------------|----------|-------------------|
| AS      | -35,1         | 410        | 120        |                | 120      | 37                |
| LAS     | -20,8         | 775        | 7,1        | 155            | 128      | 43                |

Zur Optimierung der Verschleißfestigkeit wurde daher in der eigenen Anmeldung der Anmelderin mit der Nummer DE 10 2018 124 785 vorgeschlagen, einen scheibenförmigen, chemisch vorgespannten Glasartikel bereitzustellen, der eine hohe Oberflächendruckspannung mit einer hohen Druckspannung kombiniert, wobei aber die gespeicherte bzw. speicherbare Zugspannung nicht maximiert wurde, sondern zwischen mindestens -20,6 MPa und höchstens -30 MPa, vorzugsweise höchstens -27,5 MPa, besonders bevorzugt von höchstens -25 MPa und ganz besonders bevorzugt von höchstens -24 MPa liegt. Der Glasartikel weist somit eine verbesserte Beständigkeit gegenüber sharp-impact-Belastungen auf. Diese hohe Festigkeit resultiert aus einer speicherbaren Zugspannung von mindestens -20,6 MPa. Es wurde jedoch in dieser eigenen Anmeldung der Anmelderin davon ausgegangen, dass die speicherbare Zugspannung nicht maximiert werden sollte, da man aufgrund experimenteller Daten davon ausging, dass noch höhere Werte der speicherbaren Zugspannung wieder zu einer geringen Festigkeit gegenüber sharp impact Belastungen führen würden. Auf diese Weise wurden Festigkeiten (Durchschnittswert) im Set-Drop-Test von 120cm erhalten. Dabei wurde Sandpapier der Körnung #180 verwendet, eine relativ feine Körnung. Zwar wurden hierbei gute Werte erzielt; jedoch hat sich gezeigt, dass Set-Drop-Festigkeiten bei gröberer Körnung, die einem raueren Untergrund entsprechen, deutlich schlechter ausfallen.

Es besteht damit Bedarf an Glasartikeln, welche die bestehenden Schwächen des Standes der Technik zumindest mildern, insbesondere auch bei verschärften Belastungen, wie einem Fall auf einen rauen Untergrund, noch immer eine ausreichende Verschleißfestigkeit aufweisen.

## Aufgabe der Erfindung

Die Aufgabe der Erfindung besteht in der Bereitstellung scheibenförmiger Glasartikel mit hoher Verschleißfestigkeit, insbesondere bei Anwendung als Schutzgläser für mobile Endgeräte, sowie in der Bereitstellung eines Verfahrens zur Herstellung solcher Glasartikel, welche die bestehenden Schwächen des Standes der Technik zumindest mildern.

Zusammenfassung der Erfindung

Die Aufgabe wird gelöst durch den Gegenstand der unabhängigen Ansprüche. Bevorzugte und spezielle Ausführungsformen finden sich in den abhängigen Ansprüchen sowie in der Beschreibung und den Figuren.

Die vorliegende Offenbarung beschreibt damit gemäß einem ersten Aspekt einen chemisch vorgespannten scheibenförmigen Glasartikel mit einer Zusammensetzung umfassend die Komponenten $SiO_2$, $Al_2O_3$ sowie $Li_2O$, welcher mindestens eines der folgenden Merkmale aufweist:

- eine Austauschtiefe, vorzugsweise eine Natrium-Austauschtiefe, von mindestens 85 $\mu$m, bevorzugt mindestens 100 $\mu$m und besonders bevorzugt mindestens 115 $\mu$m bei Dicken des Glasartikels von mindestens 0,4 mm bis zu weniger als 0,55 mm, von mindestens 90 $\mu$m, bevorzugt mindestens 120 $\mu$m und besonders bevorzugt mindestens 125 $\mu$m für Dicken des Glasartikels von 0,55 mm bis zu weniger als 0,6 mm , von mindestens 100 $\mu$m, bevorzugt mindestens 125 $\mu$m und besonders bevorzugt mindestens 135 $\mu$m bei Dicken des Glasartikels von 0,6 mm bis zu weniger als 0,7, von mindestens 120 $\mu$m, bevorzugt mindestens 140 $\mu$m und besonders bevorzugt mindestens 160 $\mu$m bei Dicken des Glasartikels von 0,7 mm bis zu weniger als 1 mm und mindestens 170 $\mu$m bei einer Dicke des Glasartikels von 1 mm bis zu 3 mm, vorzugsweise bis zu 2 mm,, und/oder

- eine speicherbare Zugspannung von höchstens -15 MPa, und vorzugsweise mindestens -45 MPa, vorzugsweise -35 mindestens MPa, besonders bevorzugt mindestens -30 MPa und ganz besonders bevorzugt von mindestens -27,5 MPa, und/oder

- einen Netzwerkbildnergehalt von mindestens 82 Gew.-% und/oder

- einen Gehalt an Alkalioxiden von höchstens 12 Gew.-%, bevorzugt höchstens 10 Gew.-%,

wobei der scheibenförmige Glasartikel vorzugsweise gekennzeichnet ist durch eine Set-Drop-Festigkeit, gegeben als Fallhöhe in cm, wobei die Fallhöhe als Mittelwert von 15 Proben angegeben ist, von 50 bis 150 bei Verwendung einer Sandpapier-Körnung von 60. Die Körnung eines Sandpapiers orientiert sich an der Maßeinheit mesh (#), also die Anzahl der Körner/Zoll (#60).

Hierbei wird als speicherbare Zugspannung jeweils das Integral der Zugspannung ausgehend von einer ersten Hauptoberfläche zu der gegenüberliegenden Hauptoberfläche entlang einer Geraden in Normalenrichtung verstanden und dieses Integral zum Erhalt eines für verschieden dicke Substrate vergleichbaren Wertes durch die Integrationslänge, somit die Dicke des Substrats geteilt. Somit weist dieses auf die Dicke normierte Integral der Zugspannung die Dimension einer Spannung auf und liefert vergleichbare Werte für verschieden dicke Substrate. Eine solche Ausgestaltung weist eine Reihe von Vorteilen auf.

Der chemisch vorgespannte, scheibenförmige Glasartikel mit einer Zusammensetzung umfassend die Komponenten $SiO_2$, $Al_2O_3$ sowie $Li_2O$ ist mithin als Glasartikel aus einem LAS-Glas ausgebildet. Es wurde bereits ausgeführt, dass solche Glasartikel, welche aus einem sogenannten LAS-Glas ausgebildet sind, Vorteile hinsichtlich der Vorspannbarkeit aufweisen, also günstiger zu prozessieren sind, und dabei auch sehr gute mechanische Festigkeiten erzielt werden können.

Mit dem scheibenförmigen Glasartikel nach der vorliegenden Schrift werden im Vergleich zu den chemisch vorgespannten, scheibenförmigen Glasartikeln des Standes der Technik allerdings weitere Vorteile realisiert. Insbesondere hat sich gezeigt, dass der chemisch vorgespannte, scheibenförmige Glasartikel nochmals eine gesteigerte Festigkeit gegenüber sogenannten "Sharp-impact-Belastungen", wie beispielsweise einem Set-Drop-Test, aufweist. Dabei hat sich gezeigt, dass besonders gute, also hohe, Werte für die Set-Drop-Festigkeit erhalten werden bei einer Austauschtiefe, vorzugsweise einer Natrium-Austauschtiefe, von mindestens 85 $\mu$m, bevorzugt mindestens 100 $\mu$m und besonders bevorzugt mindestens 115 $\mu$m bei Dicken des Glasartikels von mindestens 0,4 mm bis zu weniger als 0,55 mm, von mindestens 90 $\mu$m, bevorzugt mindestens 120 $\mu$m und besonders bevorzugt mindestens 125 $\mu$m für Dicken des Glasartikels von 0,55 mm bis zu weniger als 0,6 mm , von mindestens 100 $\mu$m, bevorzugt mindestens 125 $\mu$m und besonders bevorzugt mindestens 135 $\mu$m bei Dicken des Glasartikels von 0,6 mm bis zu weniger als 0,7, von mindestens 120 $\mu$m, bevorzugt mindestens 140 $\mu$m und besonders bevorzugt mindestens 160 $\mu$m bei Dicken des Glasartikels von 0,7 mm bis zu weniger als 1 mm und mindestens 170 $\mu$m bei einer Dicke des Glasartikels von 1 mm bis zu 3 mm, vorzugsweise bis zu 2 mm, und/oder einer speicherbaren Zugspannung von höchstens -15 MPa, und vorzugsweise mindestens -45 MPa, vorzugsweise mindestens -35 MPa, besonders bevorzugt mindestens -30 MPa und ganz besonders bevorzugt von mindestens -27,5 MPa.

Die Zugspannung wird in der Regel mit einem negativen Vorzeichen versehen, Druckspannungen hingegen mit einem positiven Vorzeichen, da Druck und Zug entsprechend entgegengesetzte Richtungen aufweisen. Sofern im Rahmen der vorliegenden Offenbarung auf die Größe einer Zugspannung abgestellt wird, ohne dass dabei ein Vorzeichen genannt wird, wird verstanden, dass es sich dabei um den Betrag der Spannung handelt. Es handelt sich hierbei um die Definition der Vorzeichen der Spannung, wie sie vom Fachmann, dem Entwickler von vorgespannten Schutzgläsern, hinsichtlich der Vorzeichen der Spannung üblicherweise verwendet wird. Diese ist gerade abweichend zu der üblichen Bezeichnung der Druckspannung als negativ und der Zugspannung als positiv, wie sie beispielsweise üblicherweise in der Physik vorgenommen wird. Im Rahmen der vorliegenden Offenbarung wird hier allerdings, wie ausgeführt, auf die Definition der Spannungen, wie sie üblicherweise in der Glasindustrie verwendet werden, zurückgegriffen.

Durch die Arbeit mit unterschiedlichen Korngrößen, also beispielsweise mit Sandpapieren in den Körnungen #60 bis #180, wurde herausgefunden, dass der in der eigenen Anmeldung der Anmelderin mit Nummer DE 10 2018 124 785 beschriebene Zusammenhang zwischen der gespeicherten Zugspannung und der Set-Drop-Festigkeit an die Bedingung einer minimalen DoL geknüpft ist. Diese motiviert sich aus der unterschiedlichen Korngröße der jeweiligen Sandpapiere. Es wurde bereits darauf hingewiesen, dass insbesondere raue und spitzwinklige Oberflächen besonders gefährlich für Schutzgläser bzw. Covergläser sind. Spitzwinklige Steichen bzw. das durch sie erzeugte Spannungsfeld sind je nach Größe in der Lage, die DoL zu durchdringen und in die Zugspannungszone vorzudringen und damit einen Glasbruch herbeizuführen. Insofern vergrößert sich die minimal notwendige DoL, ab der der Zusammenhang zwischen einer größeren gespeicherten Zugspannung und einer höheren Set-Drop-Festigkeit gilt, mit der Korngröße des verwendeten Schleifpapiers im Set-Drop-Test. Je größer das spitzwinklige Korn bzw. der Stein, desto größer ist diese minimale DoL oder Minimum-DoL. Besonders eindrücklich beweisen die AS-Gläser mit einem einfachen lonenaustauschprofil diesen Zusammenhang. So weisen diese bei Standardvorspanprotokoll, bei welcher eine DoL von 50 $\mu$m und eine Druckvorspannung von 926 MPa erzielt wird, eine gespeicherte Zugspannung von -33,07 MPa für die Dicke 0,7 mm auf. Aufgrund der geringen DoL setzt sich diese gespeicherte Zugspannung aber nicht in eine gute #60-Set-Drop-Festigkeit um und die Gläser versagen bereits bei Minimalhöhen von 25 cm.

Die Bestimmung der gespeicherten Zugspannung erfolgt mit einer Schwankung von ca. 5 % bis 10% um den bestimmten Wert.

Der Einfachheit halber erfolgt die Berechnung des Zugspannungsintegrals unter Annahme eines linear verlaufenden Druckspannungsprofils. Für ein Alumosilikatglas ergibt sich diese daher nach der folgenden Formel:

$$CS * DoL / 2 * 1000 * d,$$

wobei unter CS die maximale Druckspannung an der Oberfläche des Glasartikels zu verstehen ist, die DoL die Druckspannungstiefe und d die Dicke des Glasartikels ist.

Für ein LAS-Glas mit einem zusammengesetzten Druckspannungsprofil ist die Berechnung etwas komplizierter und ergibt sich nach der folgenden Formel.

$$[K\ CS * K\ DoL / 2 * 1000 + Na\ CS\ Schnittpunkt * ((Na\ DoL - K\ DoL) + (Na\ DoL - K\ DoL\ Schnittpunkt))/2 * 1000]/d.$$

Auch hierbei bezeichnet d die Dicke des Glasartikels. Der "Natrium-CS-Schnittpunkt" beschreibt die Druckspannung an dem Punkt des Druckspannungsprofils, an welchem die Natrium-Druckspannungskurve und die Kalium-Druckspannungskurve sich schneiden. Unter dem "Kalium-DoL-Schnittpunkt" ist die Tiefe im Glasartikels an dem Punkt des Druckspannungsprofils verstanden, an welchem die Natrium-Druckspannungskurve und die Kalium-Druckspannungskurve sich schneiden.

Die gespeicherte Zugspannung wie vorstehend definiert ist damit, wie aus dem Vorstehenden offensichtlich ist, eine dickenkorrelierte Größe, also die Zugspannung bezogen auf die Dicke, sodass die Einheit der gespeicherten Zugspannung MPa ist.

Es hat sich weiterhin gezeigt, dass solche scheibenförmigen, chemisch vorgespannten Glasartikel alternativ auch beschrieben werden können als umfassend einen Netzwerkbildnergehalt von mindestens 82 Gew.-% und/oder einen Gehalt an Alkalioxiden von höchstens 12 Gew.-%, bevorzugt höchstens 10 Gew.-%.

Ein hoher Gehalt an Netzwerkbildner von mindestens 82 Gew.-% ist vorteilhaft, weil auf diese Weise ein stabiles, dreidimensional vernetztes Netzwerk erhalten wird. Es hat sich gezeigt, dass auf diese Weise auch eine gute Vorspannbarkeit eines solchen Glases gegeben ist, d.h. ein solches Glas mit einem Netzwerkbildergehalt von mindestens 82 Gew.-% ist ausreichend starr, um Spannung, insbesondere Zugspannungen, im Bulk speichern zu können, ohne dass es zu einer deutlichen Relaxation kommt und die Verschleißfestigkeit des Glases bzw. des Glasartikels beispielsweise im Laufe der Zeit abnimmt.

Alternativ oder zusätzlich kann das Glas des Glasartikels einen Gehalt an Alkalioxiden von höchstens 12 Gew.-%, bevorzugt höchstens 10 Gew.-% umfassen. Es hat sich gezeigt, dass auf diese Weise überraschend gute Festigkeitswerte nach dem chemischen Vorspannen erzielt werden können. Dies ist umso überraschender, als beim chemischen Vorspannen gerade Alkaliionen ausgetauscht werden, so dass bisher davon ausgegangen wurde, dass ein hoher Gehalt an Alkalioxiden notwendig ist, um eine gute Vorspannung erzielen zu können. Die Vorspannung, die durch den Ionenaustausch vorgenommen wird, ist nämlich umso größer, je mehr kleine Ionen gegen große Ionen ausgetauscht werden.

Mit einer solchen Ausgestaltung des scheibenförmigen Glasartikels sind mithin sehr hohe Set-Drop-Festigkeiten erzielbar. Dabei sind die absoluten Fallhöhen, welche erzielt werden, zwar mit denen bereits bekannter Gläser bzw. Glasartikel vergleichbar. Jedoch wurden diese für den Fall auf einen Untergrund, welcher eine Oberfläche mit einer 180er Körnung aufwies, erhalten. Es handelt sich dabei um eine relativ feine Körnung. Ein kritischerer Fall entsteht dann, wenn ein Untergrund mit größeren, gröberen Körnern vorliegt. Denn diese können aufgrund ihrer Größe und der höheren Energie pro Korn aufgrund der geringeren Kornanzahl pro $cm^2$ tiefer in den Glasartikel eindringen und daher eher zu einem Versagen führen. Fallhöhen auf solche rauen Untergründe, wie sie beispielsweise durch Schleifpapier mit 60er Körnung erhalten werden, waren daher für die scheibenförmigen, chemisch vorgespannten Glasartikel deutlich geringer als für die Glasartikel nach der vorliegenden Offenbarung. Im Rahmen der verwendeten Versuchsanordnung sollten Set-Drop-Werte für #60 etwa um den Faktor 3,5 bis 4 geringer sein als die für Körnung #180 erhaltenen Werte.

Der Set-Drop-Test wird dabei vorzugsweise wie folgt durchgeführt:

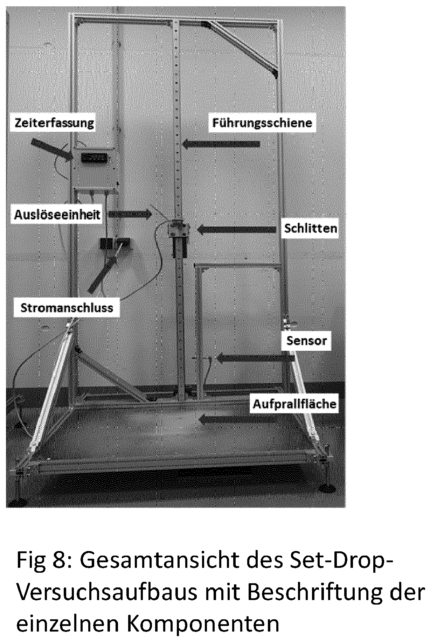

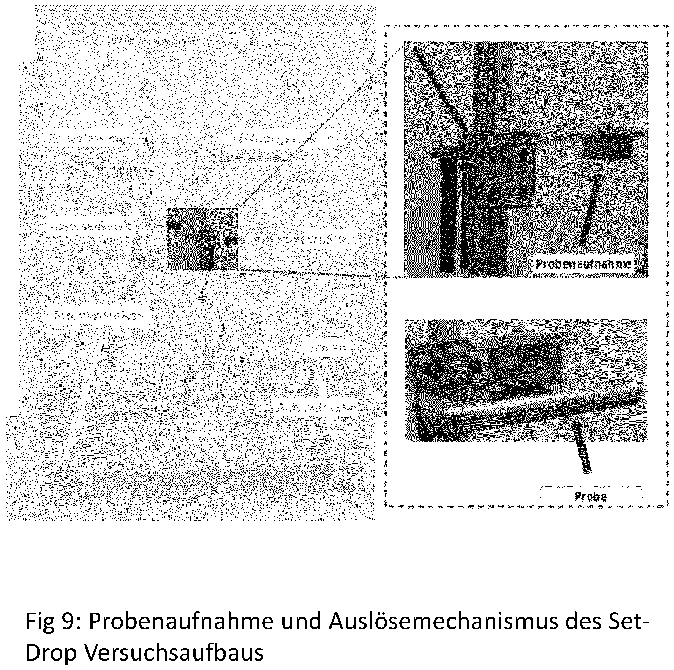

Eine Glasscheibe wird auf einer Probenaufnahme fixiert und aus kumulierenden Fallhöhen auf einen definierten Untergrund fallen gelassen. Eine Übersicht des Gesamtaufbaus ist in Figur 8 dargestellt. Der im Set-Drop-Test verwendete Glasartikel weist eine Länge von 99 mm und eine Breite von 59 mm auf und wird wie in Figur 9 dargestellt, magnetisch mit einem Probendummy in der Probenaufnahme fixiert.

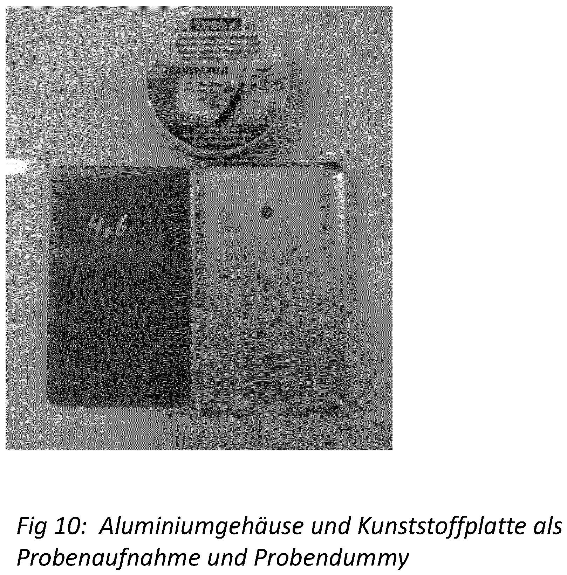

Zunächst wird dabei eine Kunststoffplatte mit Hilfe eines doppelseitigen Klebebandes in ein Metallgehäuse, welches Form und Gewicht einer Halterung für ein mobiles Endgerät, beispielsweise ein Smartphone, hat, geklebt. Es eignen sich hierbei beispielsweise Kunststoffplatten mit Dicken zwischen 4,35 mm und bis 4,6 mm (siehe Figur 10). Das Einkleben erfolgt bevorzugt mittels eines doppelseitigen Klebebandes, welches eine Dicke von etwa 100 μm aufweist. Auf die Kunststoffplatte wird dann mittels eines doppelseitigen Klebebandes, vorzugsweise eines doppelseitigen Klebebandes mit der Dicke 295 μm, insbesondere ein doppelseitiges Klebeband der Marke tesa®, , Produktnummer 05338, der zu testende scheibenförmige Glasartikel so aufgeklebt, dass zwischen der Oberkante des Gehäusebzw. der Halterung und der Oberkante des Glasartikels ein Abstand zwischen 350 μm und 450 μm erhalten wird. Der Glasartikel liegt höher als der Rahmen des Gehäuses und es darf kein direkter Kontakt zwischen Glaskörper und Aluminiumgehäuse auftreten. Das so erhaltene "Set" mit einem Gewicht von 177,5 g, welches den Einbau eines Glasartikels in ein mobiles Endgerät nachempfindet und eine Art "Dummy" für ein reales mobiles Endgerät, hier insbesondere ein Smartphone, ist, wird anschließend auf eine Fläche der Größe DIN A4, die sogenannte Aufprallfläche, mit der Glasseite mit einer Anfangsgeschwindigkeit in vertikaler Richtung, somit Fallrichtung von Null nach unten fallen gelassen. Die Aufprallfläche wird dabei wie folgt hergestellt: Sandpapier mit einer entsprechenden Körnung, beispielsweise der Körnung 60 (#60), wird mittels eines doppelseitigen Klebebandes, beispielsweise eines Klebebandes der Dicke 100 μm auf eine Bodenplatte geklebt. Als Klebeband wurde Tesa (10m/15mm), transparent, doppelseitig, Produktnummer 05338, genutzt Die Körnung ist im Rahmen der vorliegenden Offenbarung definiert gemäß den Normen der Federation of European Producers of Abrasives (FEPA), Beispiele dafür siehe auch in DIN ISO 6344., insbesondere DIN ISO 6344-2:2000-04, Schleifmittel auf Unterlagen - Korngrößenanalyse - Teil 2: Bestimmung der Korngrößenverteilung der Makrokörnungen P 12 bis P 220 (ISO 6344-2:1998). Das Gewicht der Bodenplatte, die bei den vorliegend offenbarten Werten, eine Aluminiumunterlage ist, beläuft sich auf ca. 3 kg.

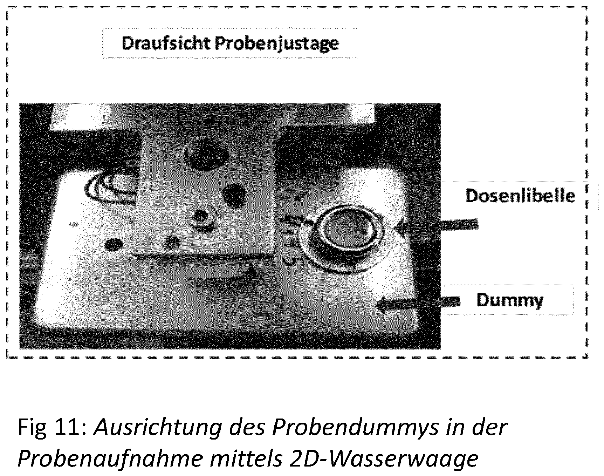

Die Bodenplatte muss fest sein und ist bevorzugt aus Aluminium oder alternativ auch aus Stahl ausgebildet. Das Sandpapier muss komplett mit Klebeband versehen und blasenfrei aufgeklebt sein. Die Aufprallfläche darf lediglich für zehn Fallversuche verwendet werden und ist nach dem zehnten Fallversuch auszutauschen. Die Probe, also das erhaltene Set, wird in die Prüfvorrichtung eingesetzt und mittels einer 2D-Wasserwaage (Dosenlibelle) so ausgerichtet, dass das Set horizontal gelagert ist, wobei der scheibenförmige Glasartikel zum Boden, also in Richtung der Aufprallfläche, zeigt (siehe Figur 11). Die erste Fallhöhe beträgt 25 cm, danach erfolgt der Fall aus einer Höhe von 30 cm. Sofern noch immer kein Bruch auftritt, wird nun die Fallhöhe in 10-cm-Schritten erhöht, bis Glasbruch eintritt. Die Bruchhöhe, der Bruchursprung sowie das Brucherscheingungsbild werden notiert. Der Test wird an 15 Proben durchgeführt, und es wird ein Mittelwert gebildet.

Es kann vorteilhaft sein, den scheibenförmigen Glasartikel so auf der Kunststoffplatte zu befestigen, dass der scheibenförmige Glasartikel im Falle eines Glasbruchs auf einer Folie haften bleibt, um zum einen möglichst problemlos entfernt zu werden, zum anderen aber auch, um eine Untersuchung des Glasartikels zu ermöglichen. Dazu kann es empfehlenswert sein, zusätzlich zu den verwendeten Klebebändern eine selbstklebende Folie zwischen der Kunststoffplatte und dem scheibenförmigen Glasartikel anzuordnen. Mittels dieser Folie kann dann der gebrochene scheibenförmige Glasartikel entfernt werden.

Im Rahmen der vorliegenden Offenbarung gelten die folgenden Definitionen:

Unter einem Tauschbad wird eine Salzschmelze verstanden, wobei diese Salzschmelze in einem Ionenaustauschverfahren für ein Glas oder einen Glasartikel zum Einsatz kommt. Im Rahmen der vorliegenden Offenbarung werden die Begriffe des Tauschbads und des Ionenaustauschbads synonym verwendet.

In der Regel werden für Tauschbäder Salze in technischer Reinheit verwendet. Dies bedeutet, dass trotz der Verwendung von beispielsweise lediglich Natriumnitrat als Ausgangsstoff für ein Tauschbad noch gewisse Verunreinigungen vom Tauschbad umfasst sind. Das Tauschbad ist dabei eine Schmelze eines Salzes, beispielsweise also von Natriumnitrat, oder eines Gemischs von Salzen, beispielsweise ein Gemisch von einem Natrium- und einem Kaliumsalz. Dabei wird die Zusammensetzung des Tauschbades in der Form angegeben, dass sie sich auf die nominelle Zusammensetzung des Tauschbades ohne Berücksichtigung von eventuell vorhandenen Verunreinigungen bezieht. Sofern daher im Rahmen der vorliegenden Offenbarung von einer 100%igen Natriumnitratschmelze gesprochen wird, bedeutet dies also, dass als Rohstoff lediglich Natriumnitrat verwendet wurde. Der tatsächliche Gehalt des Tauschbades an Natriumnitrat kann jedoch davon abweichen und wird dies in der Regel auch, da insbesondere technische Rohstoffe einen gewissen Anteil an Verunreinigungen aufweisen. Dieser liegt jedoch in der Regel bei weniger als 5 Gew.-%, bezogen auf das Gesamtgewicht des Tauschbads, insbesondere bei weniger als 1 Gew.-%.

In entsprechender Weise werden bei Tauschbädern, welche ein Gemisch verschiedener Salze aufweisen, die nominellen Gehalte dieser Salze ohne Berücksichtigung von technische bedingten Verunreinigungen der Ausgangsstoffe angegeben. Ein Tauschbad mit 90 Gew.-% $KNO_3$ und 10 Gew.-% $NaNO_3$ kann also ebenfalls noch geringe Verunreinigungen aufweisen, welche jedoch durch die Rohstoffe bedingt sind und in der Regel bei weniger als 5 Gew.-%, bezogen auf das Gesamtgewicht des Tauschbads, insbesondere bei weniger als 1 Gew.-%, liegen sollten.

Weiterhin ändert sich die Zusammensetzung des Tauschbades auch im Laufes des Ionenaustausches, da durch den fortgesetzten Ionenaustausch insbesondere Lithiumionen aus dem Glas bzw. dem Glasartikel in das Tauschbad migrieren. Eine solche Änderung der Zusammensetzung des Tauschbades durch Alterung wird vorliegend allerdings ebenfalls, sofern nicht ausdrücklich anders angegeben, nicht berücksichtigt. Vielmehr wird im Rahmen der vorliegenden Offenbarung bei der Angabe der Zusammensetzung eines Tauschbads auf die nominelle ursprüngliche Zusammensetzung abgestellt.

Unter einem Spannungsprofil wird im Rahmen der vorliegenden Offenbarung der Auftrag der Spannung in einem Glasartikel, wie beispielsweise einer Glasscheibe, über die Dicke des betrachteten Glasartikels in einem Diagramm verstanden. Sofern im Rahmen der vorliegenden Offenbarung von einem Druckspannungsprofil die Rede ist, wird hierbei derjenige Teil eines Spannungsprofils verstanden, in welchem die Spannung positive Werte annimmt, also größer als Null ist. Zugspannung weist hingegen ein negatives Vorzeichen auf.

Unter einem zusammengesetzten Druckspannungsprofil wird im Rahmen der vorliegenden Offenbarung ein solches Druckspannungsprofil verstanden, bei welchem sich die im entsprechenden Artikel, wie einem Glasartikel, erzeugte Druckspannung aus mindestens zwei Teilbereichen zusammensetzt.

Die in einem vorgespannten Glasartikel gespeicherte Druckspannung ergibt sich als Integration der Druckspannung über die Dicke des Glasartikels. Dieses Integral wird im Rahmen der vorliegenden Offenbarung als Druckspannungsintegral bezeichnet.

Die in einem vorgespannten Glasartikel gespeicherte Zugspannung ergibt sich als Mittelwert der integrierten Zugspannung über die Gesamtdicke des Glasartikels. Dieses Integral wird im Rahmen der vorliegenden Offenbarung als Zugspannungsintegral bezeichnet. Im Rahmen der vorliegenden Offenbarung wird mithin die gespeicherte Zugspannung als normierte Zugspannung oder synonym als normiertes Zugspannungsintegral, also als auf die Dicke bezogenes Zugspannungsintegral, verstanden. Die gespeicherte Zugspannung ist im Rahmen der vorliegenden Offenbarung synonym mit den Begriffen der normierten (oder auf die Dicke bezogenen) Zugspannung und des normierten (oder auf die Dicke bezogenen) Zugspannungsintegrals.

Unter einem scheibenförmigen Glasartikel wird im Rahmen der vorliegenden Offenbarung ein Glasartikel verstanden, bei welchem die laterale Abmessung in einer Raumrichtung mindestens eine Größenordnung geringer ist, als in den beiden anderen Raumrichtung, wobei diese Raumrichtungen bezüglich eines kartesischen Koordinatensystems angegeben sind, in welchem diese Raumrichtungen sich jeweils senkrecht zueinander erstrecken und dabei die Dicke in Normalenrichtung der größten oder Hauptoberfläche von der einen Hauptoberfläche zur anderen Hauptoberfläche gemessen wird.

Da die Dicke mindestens eine Größenordnung geringer ist als Breite und Länge des Glasartikels, können Breite und Länge dabei in derselben Größenordnung liegen. Es ist aber auch möglich, dass die Länge nochmals deutlich größer ist als die Breite des Glasartikels. Scheibenförmige Glasartikel im Sinne der vorliegenden Offenbarung können daher auch ein Glasband umfassen. Im Sinne der vorliegenden Offenbarung wird unter einem Glas ein Material verstanden und unter einem Glasartikel ein aus dem Material Glas hergestelltes und/oder das Material Glas umfassendes Erzeugnis. Insbesondere kann ein Glasartikel aus Glas bestehen oder überwiegend, also zu mindestens 50 Gew.-%, das Material Glas enthalten. Sofern daher im Rahmen der vorliegenden Offenbarung ein Glasartikel mit einer Zusammensetzung beschrieben wird, wird daher darunter verstanden, dass der Glasartikel ein Glas einer solchen Zusammensetzung umfasst oder überwiegend, also mindestens zu 50 Gew.-%, oder im Wesentlichen, also zu mindestens 90 Gew.-%, aus diesem Material bzw. diesem Glas besteht oder dieses umfasst.

Unter einer chemischen Vorspannung wird im Rahmen der vorliegenden Offenbarung ein Prozess verstanden, bei welchem ein Glasartikel in ein sogenanntes Tauschbad eingetaucht wird. Dabei kommt es zum Austausch von Ionen. Unter einem Kalium-Austausch wird im Sinne der vorliegenden Offenbarung verstanden, dass Kaliumionen aus dem Tauschbad in den Glasartikel, insbesondere in die Oberfläche des Glasartikels, migrieren, also beispielsweise eingebaut werden, wobei gleichzeitig kleine Alkaliionen, wie beispielsweise Natrium, aus dem Glasartikel in das Tauschbad migrieren. Unter einem Natrium-Austausch wird in entsprechender Weise verstanden, dass Natriumionen aus dem Tauschbad in die Oberfläche des Glasartikels migrieren, wohingegen kleine Ionen, beispielsweise Lithiumionen, aus dem Glasartikel, insbesondere aus der Oberfläche des Glasartikels, in das Tauschbad migrieren. Wie vorstehend bereits beschrieben, kommt es durch diesen Ionenaustausch zum Aufbau einer Druckspannungszone im Oberflächenbereich des Glasartikels.

Unter der maximalen Zugspannung wird im Rahmen der vorliegenden Offenbarung der minimale Spannungswert im Spannungsprofil eines Glasartikels verstanden.

Unter einem sogenannten "sharp impact" wird im Rahmen der vorliegenden Offenbarung eine Belastung verstanden, bei welcher die Schädigung durch einen kleinen, spitzen Gegenstand oder durch eine Vielzahl solch kleiner, spitzer Gegenstände erzeugt wird. Mit anderen Worten handelt es sich also um eine Einwirkung mit einem oder mehreren spitzen Gegenständen, also beispielsweise mit Partikeln, welche sehr geringe Krümmungsradien aufweisen bzw. bei welchen der Winkel der Spitze weniger als 100° beträgt.

Sofern im Rahmen der vorliegenden Offenbarung auf die Körnung eines Schleifpapiers abgestellt wird, wird diese in Anlehnung an die, vorzugsweise in Übereinstimmung mit der, DIN ISO 6344 angegeben. Diese Körnung orientiert sich an der Maßeinheit Mesh. Je größer die Körnung angegeben ist, desto kleiner sind dabei die abrasiven Partikel. Im Rahmen der vorliegenden Offenbarung werden zur Bezeichnung der Körnung die Begriffe "60er Körnung" und "#60", hier beispielhaft bezogen auf eine sogenannter 60er Körnung, synonym verwendet. Dies gilt selbstverständlich in entsprechender Weise für andere Körnungen, wie beispielsweise einer 100er oder 180er Körnung.

Überraschenderweise hat sich bei dem chemisch vorgespannten, scheibenförmigen Glasartikel nach der vorliegenden Offenbarung gezeigt, dass offensichtlich die Austauschtiefe, insbesondere die Natrium-Austauschtiefe, ein bestimmender Faktor hinsichtlich der Verschleißfestigkeit ist. Überraschenderweise hat also der Kalium-Austausch, trotz der damit erzielbaren sehr hohen Druckvorspannung an der Oberfläche, für die betrachtete Set-Drop-Festigkeit nur wenig Einfluss. Insbesondere ist es möglich, die sehr guten Set-Drop-Festigkeiten des Glasartikels nach der vorliegenden Offenbarung auch bei einem reinen Natrium-Austausch zu erzielen.

Der zugrundliegende Mechanismus ist hierbei nicht abschließend verstanden.

Es wird jedoch davon ausgegangen, dass eine große Austauschtiefe möglicherweise auch beim Eindringen größerer spitzer Partikel, wie sie beispielsweise in einer 60er Körnung eines handelsüblichen Schleifpapiers enthalten sind, noch ausreichend tief ist, um zu verhindern, dass die spitzen Partikel in den unter Zugspannung stehenden Kern des Glasartikels vordringen können.

Um vorteilhaft eine möglichst hohe Austauschtiefe zu erzielen, kann ein Glas verwendet werden, welches über mindestens eine der folgenden Eigenschaften verfügt:

- Eine hohe Mobilität von Ionen, insbesondere von Alkaliionen, und/oder
- Ein rigides Netzwerk, also ein starres Netzwerk, welches einer Deformation Widerstand entgegensetzt.

Ein solches Glas kann beispielsweise erhalten werden durch ein Glas einer Zusammensetzung umfassend einen hohen Gehalt an Netzwerkbildnern. Auf diese Weise kann ein starres, rigides Netzwerk erhalten werden, welches dann einer Deformation Widerstand entgegensetzt und damit eine eingebrachte Druckspannung entsprechend speichern kann. Auch kann es vorteilhaft sein, wenn der Gehalt von solchen Netzwerkwandlern, welche über eine geringe Feldstärke verfügen, begrenzt ist. Denn es ist bekannt, dass solche Netzwerkwandler die Netzwerkstruktur eher schwächen.

Alternativ oder zusätzlich kann es vorteilhaft sein, wenn das Glas eine hohe Mobilität von Ionen, insbesondere von Alkaliionen, aufweist. Denn in diesem Fall können die Alkaliionen gut ausgetauscht werden, was zu einer entsprechend hohen Austauschtiefe führen sollte.

Es kann auch ganz besonders vorteilhaft sein, wenn das Glas sowohl über eine hohe Mobilität von Ionen, insbesondere Alkaliionen, verfügt, und gleichzeitig ein rigides, starres Glasnetzwerk aufweist. Denn in diesem Fall können nicht nur die Ionen gut ausgetauscht werden, sondern pro ausgetauschten Ion sollte dann entsprechend auch eine große Spannung im Glasnetzwerk - mithin also im Glas bzw. dem resultierenden Glasartikel - gespeichert sein oder speicherbar sein.

Im Rahmen der vorliegenden Offenbarung wird der Begriff der Feldstärke eines Ions nach Dietzel verwendet. Insbesondere wird dieser Begriff bezogen auf eine oxidische Glasmatrix verwendet, wobei verstanden wird, dass dieser Wert sich je nach Koordinationszahl des betreffenden Ions ändern kann.

Hinsichtlich der Begriffe des Netzwerkwandlers und des Netzwerkbildners werden diese nach Zachariasen verstanden.

Im Rahmen der vorliegenden Offenbarung werden dabei als Netzwerkbilder insbesondere bezeichnet: $SiO_2$, $Al_2O_3$, $B_2O_3$, $P_2O_5$.

Als Netzwerkwandler werden insbesondere bezeichnet: Alkali- und Erdalkalioxide.

Als sogenanntes Zwischenoxid wird insbesondere $ZrO_2$ bezeichnet.

Ein besonders rigides, festes Netzwerk weist beispielsweise Kieselglas, amorphes $SiO_2$, auf. Kieselglas $SiO_2$ weist auch darüber hinaus eine Reihe vorteilhafter Eigenschaften auf, ist allerdings einem Schmelzprozess mit anschließender Heißformgebung aufgrund der extrem hohen Schmelztemperaturen von reinem Kieselglas nicht wirtschaftlich zugänglich. Ein scheibenförmiger Glasartikel aus reinem Kieselglas ist daher wirtschaftlich nicht darstellbar, insbesondere nicht in den für die Anwendung als Schutzglas für mobile Endgeräte relevanten Größen. Auch eine Vorspannung durch Ionenaustausch ist mit einem solchen Glas nicht möglich, da es keine signifikanten, über bloße Spuren hinausgehenden Anteile von Alkaliionen umfasst.

Es hat sich herausgestellt, dass ein ausreichend starres, rigides Glasnetzwerk erhalten wird bei einem Mindestgehalt von Netzwerkbildnern von mindestens 82 Gew.-%. Bevorzugt sollte die Summe des Gehalts des Glases und/oder des Glasartikels von $Al_2O_3$ und $SiO_2$ 92 Gew.-%, bevorzugt 90 Gew.-%, nicht überschreiten. Besonders bevorzugt sollte der Gesamtgehalt des Glases an Netzwerkbildnern nicht größer als 92 Gew.-%, ganz besonders bevorzugt nicht größer als 90 Gew.-%, sein.

Alternativ oder zusätzlich ist es möglich, einen chemisch vorgespannten, scheibenförmigen Glasartikel nach der vorliegenden Offenbarung zu erhalten, indem der Gehalt an Alkalioxiden auf höchstens 12 Gew.-%, bevorzugt höchstens 10 Gew.-%, begrenzt ist.

Denn ein Glasnetzwerk ist umso starrer, je weniger Trennstellensauerstoffe es aufweist. Durch die Zugabe von Alkalioxiden zu den Netzwerkbildnern, beispielsweise $SiO_2$ und/oder $Al_2O_3$, werden jedoch Trennstellensauerstoffe erzeugt. Die Erfinder haben herausgefunden, dass eine gute Vorspannbarkeit offensichtlich dann erzeugt werden kann, wenn der Gehalt an Alkalioxiden möglichst begrenzt ist.

Dies ist insbesondere deshalb überraschend, weil die Alkaliionen gerade diejenigen Bestandteile des Glases sind, welche in einem Ionenaustausch ausgetauscht werden. Bisher war man daher davon ausgegangen, dass eine möglichst hohe Vorspannung dann erzielt werden kann, wenn ein möglichst hoher Gehalt an austauschbaren Ionen im Glasnetzwerk vorliegt.

Gerade für das hier betrachtete Beispiel der sogenannten Set-Drop-Festigkeit erscheint allerdings weniger die Austauschbarkeit der Alkaliionen besonders ausschlaggebend zu sein, sondern vielmehr die physikalische Eigenschaft des Glasnetzwerks, starr und rigide gegenüber Deformationen zu wirken.

Ein weiterer Aspekt der vorliegenden Offenbarung betrifft einen chemisch vorgespannten, scheibenförmigen Glasartikel mit einer Zusammensetzung umfassend die Komponenten $SiO_2$, $Al_2O_3$ sowie $Li_2O$, insbesondere ein Glasartikel nach dem ersten Aspekt der vorliegenden Offenbarung, welcher erhältlich ist in einem Ionenaustausch eines Lithium-Alumosilikatglases, wobei

ein Ionenaustausch in einem Tauschbad umfassend zwischen mindestens 20 Gew.-%, und bis zu 100 Gew.-% eines Natriumsalzes, vorzugsweise Natriumnitrat $NaNO_3$, für eine Dauer von mindestens 2 Stunden, bevorzugt mindestens 4 Stunden, und höchstens 24 Stunden bei einer Temperatur zwischen mindestens 380°C und höchstens 440°C durchgeführt wird, wobei optional ein Kaliumsalz, insbesondere Kaliumnitrat, dem Tauschbad zugesetzt werden kann, insbesondere in der Form, dass die Summe des Gehalts von Natriumsalz und Kaliumsalz sich zu 100 % addieren,

sowie optional ein zweiter Ionenaustausch in einem Tauschbad umfassend zwischen 0 Gew.-% und 10 Gew.-% eines Natriumsalzes, vorzugsweise Natriumnitrat $NaNO_3$, bezogen auf die Gesamtmenge des Salzes, für eine Dauer von mindestens einer Stunde und höchstens 6 Stunden bei einer Temperatur des Tauschbades von mindestens 380°C und höchstens 440°C, wobei dem Tauschbad ein Kaliumsalz, insbesondere bevorzugt Kaliumnitrat $KNO_3$ zugesetzt wird, insbesondere in der Form, dass die Summe des Gehalts von Natriumsalz und Kaliumsalz sich zu 100 Gew.-% addieren.

Es ist weiterhin möglich, dass noch weitere Ionenaustauschritte durchgeführt werden.

Das Vorspannverfahren sollte allgemein mindestens einen Schritt, vorzugsweise zwei Schritte, seltener drei oder sogar vier Schritte eines Ionenaustauschs umfassen. Diese Schritte können mit gemischten Salzen, also umfassend ein Natrium- und ein Kaliumsalz, vorzugsweise Natriumnitrat $NaNO_3$ und Kaliumnitrat $KNO_3$, oder auch mit nur einem Salz, beispielsweise lediglich Natriumnitrat $NaNO_3$ oder Kaliumnitrat $KNO_3$, durchgeführt werden. Dabei wird in der Regel der erste Schritt prozentual mehr Natriumsalz umfassen als der zweite Schritt und zumeist wird der erste Schritt auch von der Dauer her länger sein als der zweite Schritt.

In einem ersten Austauschschritt umfasst das Tauschbad beispielsweise zwischen 20 Gew.-% und bis zu 100 Gew.-% Natriumsalz, bezogen auf die Gesamtmenge des Salzes. Der erste Schritt wird dabei für eine Dauer zwischen beispielsweise mindestens 2 Stunden, bevorzugt mindestens 4 Stunden und höchstens 24 Stunden durchgeführt, wobei die Temperatur des Tauschbades zwischen 380°C und 440°C variieren kann.

In einem zweiten Austauschschritt umfasst das Tauschbad beispielsweise zwischen 0 Gew.-% und 10 Gew.-

% Natriumsalz, bezogen auf die Gesamtmenge des Salzes. Der zweite Schritt kann zwischen mindestens einer Stunde und höchstens 6 Stunden dauern. Auch hier kann die Temperatur des Tauschbades zwischen mindestens 380°C und höchstens 440°C variieren.

Durch eine Herstellung eines vorgespannten Glasartikels wie vorstehend ausgeführt kann auf besonders schnelle Weise ein Glasartikel erzeugt werden, welcher eine hohe Festigkeit aufweist.

Gemäß einem dritten Aspekt der vorliegenden Offenbarung betrifft die vorliegende Offenbarung einen chemisch vorgespannten, scheibenförmigen Glasartikel mit einer Zusammensetzung umfassend die Komponenten $SiO_2$, $Al_2O_3$ sowie $Li_2O$, vorzugsweise nach dem ersten und/oder dem zweiten Aspekt der vorliegenden Offenbarung, mit einer Zusammensetzung umfassend die folgenden Komponenten in Gew.-%.

| | |
|---|---|
| $SiO_2$ | 57 bis 69, bevorzugt 59 bis 69, besonders bevorzugt 61 bis 69, wobei die Obergrenze jeweils vorzugsweise 67 sein kann, |
| $Al_2O_3$ | 17 bis 25, bevorzugt 17 bis 21, |
| $B_2O_3$ | 0 bis 7, bevorzugt 0 bis 5, besonders bevorzugt 0 bis 4,5, |
| $Li_2O$ | 3 bis 5,5, bevorzugt 3,5 bis 5,5, |
| $Na_2O$ | 0,8 bis 7, bevorzugt 0,8 bis 6, besonders bevorzugt 0,8 bis 5,5, |

wobei vorzugsweise die Summe des Gehalts von $Al_2O_3$ und $SiO_2$, bezogen auf die Angabe in Gew.-%, zwischen mindestens 75 und höchstens 92, bevorzugt höchstens 90, liegt.

Es wurde bereits ausgeführt, dass die $SiO_2$ als reine Kieselglas ein besonders starres Netzwerk ausbildet. Daher sollte der Gehalt an $SiO_2$ in einem Glasartikel nach der vorliegenden Offenbarung mindestens 57 Gew.-% betragen. Ein hoher Gehalt an $SiO_2$ ist auch günstig für eine möglichst hohe chemische Beständigkeit. Auch darf der Gehalt an $SiO_2$ nicht zu niedrig sein, da es sonst möglicherweise zu Entglasungen kommen könnte. Vorzugsweise beträgt der Gehalt an $SiO_2$ gemäß den vorliegend offenbarten Ausführungsformen mindestens 59 Gew.-%, besonders bevorzugt mindestens 61 Gew.-%. Der Gehalt an $SiO_2$ ist aber vorliegend begrenzt, da es ansonsten zu einer zu hohen Schmelztemperatur kommen könnte. Vorzugsweise sollte daher der Gehalt an $SiO_2$ höchstens 69 Gew.-% betragen. Vorzugsweise beträgt die Obergrenze für den $SiO_2$-Gehalt gemäß einer Ausführungsform mit den ansonsten weiteren vorliegend offenbarten Zusammensetzungsanteilen 67 Gew.-%.

$Al_2O_3$ ist ein bekannter Netzwerkbildner, welcher insbesondere alkalihaltigen Silikatgläsern zugesetzt wird. Denn durch die Zugabe von $Al_2O_3$ wird die Zahl der Trennstellensauerstoffe verringert, sodass trotz einem gewissen Gehalt eines Glases ein starres Netzwerk erhalten werden kann. Auf diese Weise kann also die Vorspannbarkeit eines alkalihaltigen Silikatglases verbessert werden. Der Mindestgehalt des Glases an $Al_2O_3$ beträgt daher vorteilhaft gemäß einer Ausführungsform mit den ansonsten weiteren vorliegend offenbarten Zusammensetzungsanteilen 17 Gew.-%. Allerdings verringert ein zu hoher $Al_2O_3$-Gehalt die chemische Beständigkeit des resultierenden Glases bzw. Glasartikels, insbesondere die Säurebeständigkeit. Vorzugsweise ist daher der Gehalt des Glases bzw. Glasartikels nach weiteren Ausführungsformen mit den ansonsten weiteren vorliegend offenbarten Zusammensetzungsanteilen begrenzt und beträgt bevorzugt höchstens 25 Gew.-%, besonders bevorzugt höchstens 21 Gew.-%.

Das Glas nach der vorliegenden Offenbarung - bzw. in entsprechender Weise der Glasartikel nach der vorliegenden Offenbarung - umfasst ebenfalls $Li_2O$ als Komponente. $Li_2O$ ist notwendiger Bestandteil des Glases bzw. Glasartikels nach der vorliegenden Offenbarung, da auf diese Weise ein Natriumaustausch, also ein Austausch von Lithiumionen aus dem Glas gegen Natriumionen aus dem Tauschbad, möglich ist. Wie hinsichtlich des Glasartikels nach dem ersten Aspekt der vorliegenden Offenbarung ausgeführt, kann eine besonders hohe Natrium-Austauschtiefe ein bestimmendes Merkmal eines Glasartikels nach der vorliegenden Offenbarung sein. Der Lithium-Gehalt sollte daher möglichst mindestens 3 Gew.-%, vorzugsweise mindestens 3,5 Gew.-%, betragen. Es ist jedoch vorteilhaft, wenn der $Li_2O$-Gehalt nicht zu hoch ist, denn $Li_2O$ ist weiterhin auch eine Glaskomponente, die bekanntermaßen zu Entmischung und/oder Kristallisation eines Glases führt oder führen kann. Vorteilhafterweise beträgt daher der Gehalt des Glases bzw. des scheibenförmigen Glasartikels höchstens 5,5 Gew.-%.

$B_2O_3$ ist eine lediglich optionale Komponente eines Glasartikels nach Ausführungsformen mit den ansonsten weiteren vorliegend offenbarten Zusammensetzungsanteilen der vorliegenden Offenbarung. $B_2O_3$ ist ein bekannter Netzwerkbildner und verbessert insbesondere die Schmelzbarkeit eines Glases, da es den Schmelzpunkt erniedrigt. Auch ist $B_2O_3$ vorteilhaft, da es die Kratzfestigkeit eines Glases erhöht. Daher kann ein gewisser Anteil von $B_2O_3$ vorteilhaft sein, denn ein Kratzen ist, wie der sogenannte Set-Drop, ebenfalls eine Belastung eines Artikels oder Erzeugnisses mit einem spitzen Gegenstand. Vorteilhaft ist der Gehalt an $B_2O_3$ jedoch begrenzt und sollte gemäß Ausführungsformen mit den ansonsten weiteren vorliegend offenbarten Zusammensetzungsanteilen höchstens 7 Gew.-%, vorzugsweise höchstens 5 Gew.-% und besonders bevorzugt höchstens 4,5 Gew.-% betragen.

$Na_2O$ ist ein weiterer Bestandteil des Glases bzw. Glasartikels nach einer Ausführungsform mit den ansonsten weiteren vorliegend offenbarten Zusammensetzungsanteilen. Natriumionen können in einem Ionenaustausch nach diesen Ausführungsformen der vorliegenden Offenbarung gegen Kaliumionen ausgetauscht werden. Daher sollte, um eine aus dem Kalium-Austausch resultierende möglichst hohe Oberflächendruckvorspannung zu erzielen, mindestens 0,8 Gew.-% $Na_2O$ vom Glas bzw. vom Glasartikel gemäß Ausführungsformen mit den ansonsten weiteren vorliegend offenbarten Zusammensetzungsanteilen umfasst sein. Jedoch ist der Natriumoxidgehalt des Glasartikels bzw. Glases nach der vorliegenden Offenbarung bevorzugt begrenzt und beträgt nicht mehr als 7 Gew.-%, besonders bevorzugt nicht mehr als 6 Gew.-% und ganz besonders bevorzugt nicht mehr als 5,5 Gew.-%. Denn ein hoher Gehalt an Natriumoxid führt beispielsweise zu einer Verminderung der chemischen Beständigkeit des Glases bzw. Glasartikels, insbesondere der Säurebeständigkeit.

$P_2O_5$ ist eine weitere, optionale Komponente des Glases und/oder des Glasartikels gemäß Ausführungsformen mit den ansonsten weiteren vorliegend offenbarten Zusammensetzungsanteilen. Ein Gehalt des Glases und/oder des Glasartikels an $P_2O_5$ kann vorteilhaft sein, denn $P_2O_5$ als Glaskomponenten kann bewirken, dass in kürzerer Zeit eine tiefere Vorspannung erzielt wird. $P_2O_5$ kann also vorteilhaft sein, denn der Austauschprozess kann auf diese Weise beschleunigt werden. Jedoch ist ein hoher Gehalt des Glases an $P_2O_5$ ungünstig, denn $P_2O_5$ kann das Material des Schmelzaggregats angreifen. Der Gehalt des Glases und/oder des Glasartikels an $P_2O_5$ gemäß Ausführungsformen mit den ansonsten weiteren vorliegend offenbarten Zusammensetzungsanteilen sollte daher höchstens 3 Gew.-% betragen. Bevorzugt beträgt der Gehalt des Glases an und/oder des Glasartikels an $P_2O_5$ nicht mehr als 2 Gew.-%, besonders bevorzugt nicht mehr als 1,7 Gew.-%.

Bevorzugt liegt die Summe des Gehalts von $Al_2O_3$ und $SiO_2$, bezogen auf die Angabe in Gew.-%, zwischen mindestens 75 und höchstens 92, bevorzugt höchstens 90.

Ein Gehalt an den Netzwerkbildnern $Al_2O_3$ und $SiO_2$ von mindestens 75 Gew.-% ist insbesondere vorteilhaft, weil auf diese Weise eine ausreichende Menge an Glasbildnern vorhanden ist. Mit anderen Worten wird auf diese Weise sichergestellt, dass ein glasiges Material erhalten wird und es nicht zu einer Kristallisation kommt. Andererseits sollte der Gehalt an den vorgenannten Netzwerkbildnern nicht zu hoch sein, denn sonst ist das resultierende Glas nicht mehr gut schmelzbar. Daher ist der Gehalt von $Al_2O_3$ und $SiO_2$ vorzugsweise begrenzt und beträgt nicht mehr als 92 Gew.-%, bevorzugt nicht mehr als 90 Gew.-%. Vorzugsweise beträgt der gesamte Gehalt des Glases bzw. Glasartikels an Netzwerkbildnern nicht mehr als 92 Gew.-%, besonders bevorzugt nicht mehr als 90 Gew.-%.

Gemäß einer weiteren Ausführungsform beträgt die Dicke des Glasartikels mindestens 0,4 mm und höchstens 3 mm.

Vorzugsweise beträgt die Dicke des Glasartikels mindestens 0,5 mm.

Die Dicke des Glasartikels ist weiterhin vorzugsweise begrenzt und beträgt gemäß einer Ausführungsform höchstens 2 mm, vorzugsweise höchstens 1 mm.

Die vorliegende Offenbarung betrifft weiterhin die Verwendung eines Glasartikels nach Ausführungsformen als Abdeckscheibe, insbesondere als Abdeckscheibe für Geräte der Unterhaltungselektronik, insbesondere für Anzeigeeinrichtungen, Bildschirme von Recheneinrichtungen, Messgeräten, TV-Geräten, insbesondere als Abdeckscheibe für mobile Geräte, insbesondere für zumindest ein Gerät aus der Gruppe, welche umfasst: mobile Endgeräte, mobile Datenverarbeitungsgeräte, insbesondere Mobiltelefone, mobile Rechner, Palmtops, Laptops, Tablet-Computer, Wearables, tragbare Uhren und Zeitmesseinrichtungen, oder als Schutzverglasung, insbesondere als Schutzverglasung für Maschinen, oder als Verglasung in Hochgeschwindigkeitszügen, oder als Sicherheitsverglasung, oder als Automobilverglasung, oder in Tauchuhren, oder in U-Booten, oder als Abdeckscheibe für explosionsgeschützte Geräte, insbesondere für solche, in denen der Einsatz von Glas zwingend vorgeschrieben ist.

Ein weiterer Aspekt der vorliegenden Offenbarung betrifft ein Lithium-Aluminium-Silikatglas, umfassend die folgenden Komponenten in Gew.-%:

$SiO_2$	57 bis 69, bevorzugt 59 bis 69, besonders bevorzugt 61 bis 69, wobei die Obergrenze jeweils vorzugsweise 67 sein kann,

$Al_2O_3$	17 bis 25, bevorzugt 17 bis 21,
$B_2O_3$	0 bis 7, bevorzugt 0 bis 5, besonders bevorzugt 0 bis 4,5,
$Li_2O$	3 bis 5,5, bevorzugt 3,5 bis 5,5,
$Na_2O$	0,8 bis 7, bevorzugt 0,8 bis 6, besonders bevorzugt 0,8 bis 5,5,

wobei vorzugsweise die Summe des Gehalts von $Al_2O_3$ und $SiO_2$, bezogen auf die Angabe in Gew.-%, zwischen mindestens 75 und höchstens 92, bevorzugt höchstens 90, liegt.

Ein solches Glas ist vorteilhaft, weil es chemisch so vorspannbar ausgestaltet ist, dass chemisch vorgespannte Glasartikel mit besonders hohen Festigkeit im sogenannten Set-Drop-Test auch bei Verwendung von groben Körnungen, beispielsweise von 60er Körnungen, erhalten werden. Das Glas nach der vorliegenden Offenbarung ist trotz eines hohen Gehalts an Glasbildnern, hier insbesondere bevorzugt eines hohen Gehalts an den Glasbildnern $SiO_2$ und $Al_2O_3$ von mindestens 75 Gew.-%, noch überraschend gut schmelzbar, sodass die Zugabe von $B_2O_3$, einer Komponente, die bekanntermaßen die Schmelzbarkeit erhöht, nicht zwingend erforderlich. Überraschend hat sich gezeigt, dass die Zugabe von $B_2O_3$, obwohl dieses die Kratzfestigkeit eines Glases bzw. eines Glasartikels erhöht, für die Erzielung einer hohen Set-Drop-Festigkeit nicht zwingend notwendig ist und im Gegenteil überraschenderweise sogar schädlich sein kann, obwohl auch die Set-Drop-Festigkeit wie die Kratzfestigkeit eine Belastung der Oberfläche eines Artikels oder Erzeugnisses mit einem spitzen Gegenstand ist.

Dies kann nach Auffassung der Erfinder möglicherweise darauf zurückzuführen sein, dass ein Glas der Zusammensetzung in den oben genannten Grenzen so vorspannbar ausgestaltet ist, dass eine besonders hohe Austauschtiefe, insbesondere eine besonders hohe Austauschtiefe durch den Natriumaustausch (also den Austausch von Natriumionen aus einer Natriumsalzschmelze gegen Lithiumionen aus dem Glas), bestimmend für die Ausbildung einer guten Set-Drop-Festigkeit ist und erstaunlicherweise weniger die Resistenz der Oberfläche gegenüber dem Kratzen bzw. dem Eindringen eines spitzen Gegenstandes.

Dabei ist trotz einer relativ geringen Menge an $Li_2O$ in den Gläsern nach der vorliegenden Offenbarung noch eine ausreichende Vorspannbarkeit gegeben. Dies ist umso überraschender, als der Anteil an $Li_2O$ in den Gläsern nach Ausführungsformen mit den ansonsten weiteren vorliegend offenbarten Zusammensetzungsanteilen deutlich begrenzt ist und nicht mehr als 5,5 Gew.-% beträgt. Auch ist es bekannt, dass das $Li^+$-Ion eine größere Feldstärke aufweist als beispielsweise das $Na^+$-Ion und daher in einem Glasnetzwerk fester gebunden ist als letzteres. Dennoch ist offensichtlich eine ausreichende Mobilität des $Li^+$-Ions im Glas nach den Ausführungsformen der vorliegenden Offenbarung gegeben. Es scheint, dass gerade die Kombination der Komponenten des Glases nach der vorliegenden Offenbarung, insbesondere das Verhältnis der drei Hauptkomponenten Lithiumoxid, Aluminiumoxid und Siliziumoxid, zueinander dazu führt, dass eine ausreichende Mobilität der Lithiumionen im Glasnetzwerk gegeben ist. Dabei ist das Glasnetzwerk offensichtlich trotz eines gewissen Gehalts an Natriumoxid, welches beispielsweise auch einen optionalen, jedoch vorliegend nicht zwingenden, Kaliumaustausch ermöglicht, noch ausreichend rigide, um ein effizientes Vorspannen zu ermöglichen, und weiterhin auch eine bekannte Komponente ist, die die Schmelzbarkeit eines Glases verbessert. Es hat sich jedoch gezeigt, dass Natriumoxid als Komponente in einem Glasnetzwerk die Vorspannbarkeit negativ beeinträchtigen kann, da durch Natriumoxid die Anzahl der Trennstellensauerstoffe erhöht wird, wodurch das Netzwerk weniger starr und rigide ist. Es scheint jedoch, dass dies durch das Zusammenspiel der einzelnen Komponenten ausgeglichen wird, sodass mit dem Glas nach der vorliegenden Offenbarung ein sehr guter Kompromiss zwischen Set-Drop-Festigkeit, Schmelzbarkeit und Vorspannbarkeit erzielbar ist.

Gemäß einer Ausführungsform des Lithium-Aluminium-Silikatglases ist diese gegeben durch folgende Zusammensetzung in Gew.-%:

| | |
|---|---|
| $SiO_2$ | 57 bis 69, bevorzugt 59 bis 69, besonders bevorzugt 61 bis 69, wobei die Obergrenze jeweils vorzugsweise 67 sein kann, |
| $Al_2O_3$ | 17 bis 25, bevorzugt 17 bis 21, |
| $B_2O_3$ | 0 bis 7, bevorzugt 0 bis 5, besonders bevorzugt 0 bis 4,5, |
| $Li_2O$ | 3 bis 5,5, bevorzugt 3,5 bis 5,5, |
| $Na_2O$ | 0,8 bis 7, bevorzugt 0,8 bis 6, besonders bevorzugt 0,8 bis 5,5, |
| $K_2O$ | 0 bis 1, bevorzugt 0 bis 0,8, besonders bevorzugt 0 bis 0,7 |
| MgO | 0 bis 2, bevorzugt 0 bis 1,5, besonders bevorzugt 0 bis 1, |
| CaO | 0 bis 4,5, |
| SrO | 0 bis 2, bevorzugt 0 bis 1,5, besonders bevorzugt 0 bis 1, |
| ZnO | 0 bis 3, bevorzugt 0 bis 2, besonders bevorzugt 0 bis 1,5, |
| $P_2O_5$ | 0 bis 3, bevorzugt 0 bis 2, besonders bevorzugt 0 bis 1,7, |
| $ZrO_2$ | 0 bis 3, bevorzugt 0 bis 2, |

wobei weiterhin Verunreinigungen und/oder Läutermittel und/oder färbende Bestandteile in Mengen bis zu 2 Gew.-% enthalten sein können.

Ein nochmals weiterer Aspekt der vorliegenden Offenbarung betrifft ein Verfahren zur Herstellung eines Glasartikels nach den vorliegend offenbarten Ausführungsformen umfasst die Schritte:

- einen Ionenaustausch in einem Tauschbad umfassend zwischen mindestens 20 Gew.-%, und bis zu 100 Gew.-% eines Natriumsalzes, vorzugsweise Natriumnitrat $NaNO_3$, für eine Dauer von mindestens 2 Stunden, bevorzugt mindestens 4 Stunden, und höchstens 24 Stunden bei einer Temperaturzwischen mindestens 380°C und höchstens 440°C durchgeführt wird, wobei optional ein Kaliumsalz, insbesondere Kaliumnitrat, dem Tauschbad zugesetzt werden kann, insbesondere in der Form, dass die Summe des Gehalts von Natriumsalz und Kaliumsalz sich zu 100 % addieren,

- sowie optional einen zweiten Ionenaustausch in einem Tauschbad umfassend zwischen 0 Gew.-% und 10 Gew.-% eines Natriumsalzes, vorzugsweise Natriumnitrat $NaNO_3$, bezogen auf die Gesamtmenge des Salzes, für eine Dauer von mindestens einer Stunde und höchstens 6 Stunden bei einer Temperatur des Tauschbades von mindestens 380°C und höchstens 440°C, wobei dem Tauschbad ein Kaliumsalz, insbesondere bevorzugt Kaliumnitrat $KNO_3$ zugesetzt wird, insbesondere in der Form, dass die Summe des Gehalts von Natriumsalz und Kaliumsalz sich zu 100 Gew.- % addieren,

- sowie optional einen oder mehrere weitere Ionenaustauschschritte.

Beispiele

Ein beispielhafter Zusammensetzungsbereich eines Glases und/oder eines Glasartikels ist gegeben durch folgende Zusammensetzung in Gew.-%:

| | |
|---|---|
| $SiO_2$ | 57 bis 69, bevorzugt 59 bis 69, besonders bevorzugt 61 bis 69, wobei die Obergrenze jeweils vorzugsweise 67 sein kann, |
| $Al_2O_3$ | 17 bis 25, bevorzugt 17 bis 21, |
| $B_2O_3$ | 0 bis 7, bevorzugt 0 bis 5, besonders bevorzugt 0 bis 4,5, |
| $Li_2O$ | 3 bis 5,5, bevorzugt 3,5 bis 5,5, |
| $Na_2O$ | 0,8 bis 7, bevorzugt 0,8 bis 6, besonders bevorzugt 0,8 bis 5,5, |
| $K_2O$ | 0 bis 1, bevorzugt 0 bis 0,8, besonders bevorzugt 0 bis 0,7, |
| $MgO$ | 0 bis 2, bevorzugt 0 bis 1,5, besonders bevorzugt 0 bis 1, |
| $CaO$ | 0 bis 4,5, |
| $SrO$ | 0 bis 2, bevorzugt 0 bis 1,5, besonders bevorzugt 0 bis 1, |
| $ZnO$ | 0 bis 3, bevorzugt 0 bis 2, besonders bevorzugt 0 bis 1,5, |
| $P_2O_5$ | 0 bis 3, bevorzugt 0 bis 2, besonders bevorzugt 0 bis 1,7, |
| $ZrO_2$ | 0 bis 3, bevorzugt 0 bis 2, |

wobei weiterhin Verunreinigungen und/oder Läutermittel und/oder färbende Bestandteile in Mengen bis zu 2 Gew.-% enthalten sein können.

Eine beispielhafte Zusammensetzung eines Glases, aus welchem ein scheibenförmiger Glasartikel nach einer Ausführungsform herstellbar ist, und/oder eines Glasartikels nach einer Ausführungsform, ist gegeben durch folgende Zusammensetzung in Gew.-%

| | |
|---|---|
| $SiO_2$ | 57 bis 69, bevorzugt 59 bis 69, besonders bevorzugt 61 bis 69, wobei die Obergrenze jeweils vorzugsweise 67 sein kann, |
| $Al_2O_3$ | 17 bis 25, bevorzugt 17 bis 21, |
| $B_2O_3$ | 0 bis 7, bevorzugt 0 bis 5, besonders bevorzugt 0 bis 4,5, |
| $Li_2O$ | 3 bis 5,5, bevorzugt 3,5 bis 5,5, |
| $Na_2O$ | 0,8 bis 7, bevorzugt 0,8 bis 6, besonders bevorzugt 0,8 bis 5,5, |

wobei vorzugsweise die Summe des Gehalts von $Al_2O_3$ und $SiO_2$, bezogen auf die Angabe in Gew.-%, zwischen mindestens 75 und höchstens 92, bevorzugt höchstens 90, liegt.

Beschreibung der Zeichnungen

Die Erfindung wird im Folgenden anhand von Figuren weiter erläutert. Es zeigen:

Fig. 1     den Zusammenhang zwischen der gespeicherten Zugspannung und den Set-Drop-Festigkeiten bei Körnung 60 (#60),

Fig. 2     die minimale DoL in Abhängigkeit von der verwendeten Körnung im Set-Drop-Test,

Fig. 3 und 4     Bruchbilder von Glasartikeln in Abhängigkeit von der gespeicherten Zugspannung für zwei unterschiedliche Gläser,

Fig. 5     eine schematische und nicht maßstabsgetreue Darstellung eines Glasartikels nach Ausführungsformen dieser Offenbarung,

Fig. 6     ein schematisches und nicht maßstabsgetreues Schnittbild durch einen Glasartikel nach Ausführungsformen dieser Offenbarung,

Fig. 7          ein beispielhaftes Spannungsprofil eines Glasartikels,

Fig. 8          eine Gesamtansicht des Set-Drop-Versuchsaufbaus mit Beschriftung der einzelnen Komponenten

Fig. 9          die Probenaufnahme und den Auslösemechanismus des Set-Drop-Versuchsaufbaus

Fig. 10         das Aluminiumgehäuse und die Kunststoffplatte als Probenaufnahme und Probendummy, sowie

Fig. 11         die Ausrichtung des Probendummys mittels 2D-Wasserwaage.

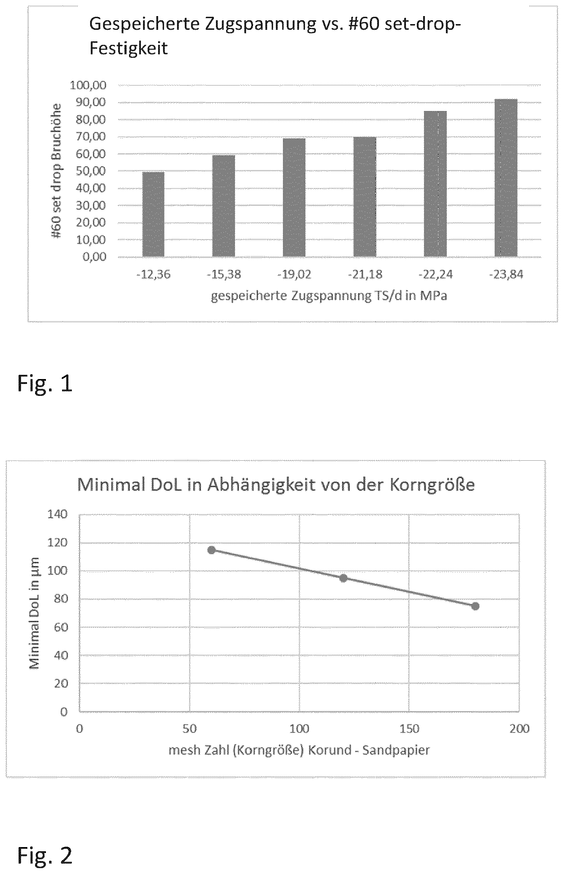

Fig. 1 zeigt den Zusammenhang zwischen der gespeicherten Zugspannung und den Ergebnissen zur Set-Drop-Festigkeit bei Verwendung eines Schleifpapiers der Körnung #60. Es zeigt sich hier, dass diese Festigkeit, welche als Mittelwert der Fallhöhe in Zentimetern für 15 Proben gegeben ist, anders als dies sich beispielsweise in der eigenen Anmeldung der Anmelderin mit der Nummer DE 10 2018 124 785 darstellte, die Set-Drop-Festigkeit mit steigender gespeicherter Zugspannung (diese wird abgekürzt im Rahmen der vorliegenden Offenbarung als TS/d, wobei "TS" für "tensile stress" steht und "d" für die Dicke des Glasartikels, wobei die Einheit der gespeicherten Zugspannung MPa ist) zunimmt.

Dies gilt jedoch nicht absolut, sondern nur dann, wenn der Gegenstand mit geringem Krümmungsradius die DoL nicht durchdringt. Es hat sich vielmehr gezeigt, dass der beschriebene Zusammenhang zwischen der gespeicherten Zugspannung und der Set-Drop-Festigkeit an die Bedingung einer minimalen DoL geknüpft ist. Wie auch bereits weiter oben ausgeführt, motiviert sich diese aus der unterschiedlichen Korngröße der jeweiligen Sandpapiere. Fig. 2 ist eine Illustration hierfür, in welcher die minimale DoL für ein Glas bestimmter Zusammensetzung nach einer Ausführungsform der vorliegenden Offenbarung bzw. für einen Glasartikel nach Ausführungsformen der vorliegenden Offenbarung aufgetragen wurde. Je feiner die Körnung (also mit steigender Zahl der Körner / Fläche, d.h. also hin zu größeren #-Werten), desto geringer ist prinzipiell diese minimale DoL. Es wurde bereits darauf hingewiesen, dass insbesondere raue und spitzwinklige Oberflächen besonders gefährlich für Schutzgläser bzw. Covergläser sind. Spitzwinklige Steichen bzw. das durch sie erzeugte Spannungsfeld sind je nach Größe in der Lage, die DoL zu durchdringen und in die Zugspannungszone vorzudringen und damit einen Glasbruch herbeizuführen. Insofern vergrößert sich die minimal notwendige DoL, ab der der Zusammenhang zwischen einer größeren gespeicherten Zugspannung und einer höheren Set-Drop-Festigkeit gilt, mit der Korngröße des verwendeten Schleifpapiers im Set-Drop-Test. Je größer das spitzwinklige Korn bzw. der Stein, desto größer ist diese minimale DoL oder Minimum-DoL. Besonders eindrücklich beweisen die AS-Gläser mit einem einfachen Ionenaustauschprofil diesen Zusammenhang. So weisen diese bei Standardvorspannprotokoll, bei welcher eine DoL von 50 µm und eine Druckvorspannung von 926 MPa erzielt wird, eine gespeicherte Zugspannung von 33,07 MPa für die Dicke 0,7 mm auf. Aufgrund der geringen DoL setzt sich diese gespeicherte Zugspannung aber nicht in eine gute #60-Set-Drop-Festigkeit um und die Gläser versagen bereits bei Minimalhöhen von 25 cm.

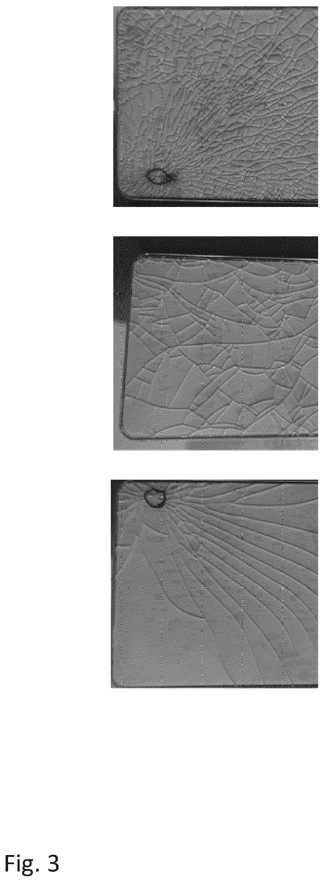

Fig. 3 zeigt Bruchbilder aus Set-Drop-Tests unter Verwendung von #60 von Glasartikeln umfassend ein LAS-Glas einer ersten Zusammensetzung nach einer Ausführungsform dieser Offenbarung. Im oberen Bild wies der Glasartikel eine speicherbare Zugspannung von -23,84 MPa auf, im mittleren Bild -21,97 MPa und im unteren Bild -19,61 MPa. Es zeigt sich damit, dass das Bruchbild umso feiner wird, je höher die im Glasartikel gespeicherte Zugspannung ist.

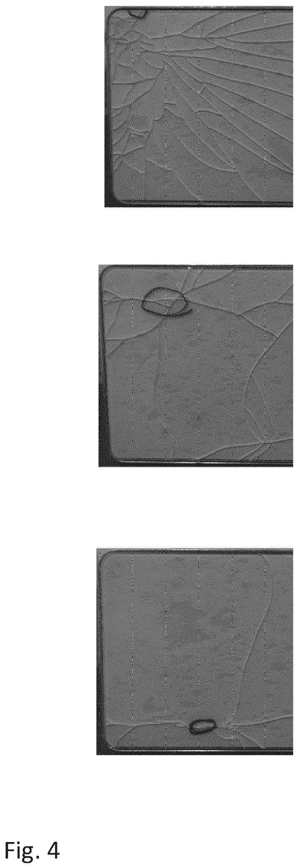

Dies kann auch anhand der fotographischen Abbildungen von Fig. 4 weiter belegt werden. Hier sind Bruchbilder aus Set-Drop-Tests unter Verwendung von #60 von Glasartikeln umfassend ein LAS-Glas einer zweiten Zusammensetzung nach einer Ausführungsform dieser Offenbarung dargestellt. Im oberen Bild betrug die speicherbare Zugspannung -19,02 MPa, im mittleren Bild - 15,38 MPa und im unteren Bild lediglich -12,36 MPa.

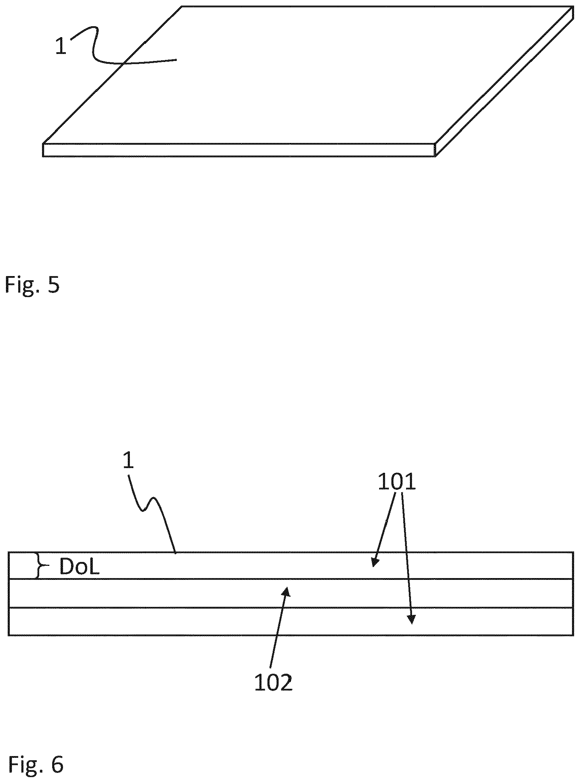

Fig. 5 ist die schematische und nicht maßstabsgetreue Darstellung eines scheibenförmigen Glasartikels nach Ausführungsformen dieser Offenbarung.

Fig. 6 zeigt eine schematische und nicht maßstabsgetreue Schnittdarstellung eines Glasartikels 1 nach Ausführungsformen dieser Offenbarung. Der Glasartikel 1 weist dabei zwei an den beiden Hauptflächen des Glasartikels angeordnete Zonen 101 auf, welche unter Druckspannung stehen und auch als Druckspannungszonen bezeichnet werden. Diese Druckspannungszonen 101 haben die ebenfalls in Fig. 6 schematisch eingezeichnete Abmessung "DoL". Es ist möglich, dass die DoL sich auf den beiden Seiten des scheibenförmigen Glasartikels hinsichtlich ihrer Größe unterscheidet, wobei diese Unterschiede jedoch in der Regel im Rahmen der Messgenauigkeit liegen, sodass die DoL für einen scheibenförmigen Glasartikel 1 in der Regel auf beiden Seiten - zumindest im Rahmen der Messgenauigkeit - gleich ist.

Zwischen den Druckspannungszonen 101 liegt der Bereich 102, welcher unter Zugspannung steht.

In Fig. 7 sind in einem Diagramm, bei welchem auf der y-Achse die Spannung in MPa aufgetragen ist und auf der x-Achse die Glastiefe in µm, anhand eines beispielhaften zusammengesetzten Spannungsprofils 2 eines beispielhaften Glasartikels kennzeichnende Größen eines Spannungsprofils für einen Glasartikel, welcher ein LAS-Glas umfasst, dargestellt. Hierbei ist nicht die Spannung über die gesamte Dicke des Glasartikels dargestellt, vielmehr ist lediglich beispielhaft bis etwa zur Hälfte des Glasartikels die Spannung eingetragen.

Der Punkt 201 bezeichnet hierbei die an der Oberfläche des Glasartikels, also jeweils bei der Glastiefe 0 $\mu$m vorliegende Spannung. Hier handelt es sich um Druckspannung, die im Wesentlichen durch den Austausch von Kaliumionen hervorgerufen ist (Kalium-CS). Der Punkt 202 bezeichnet in Figur 7 die an der Oberfläche des Glasartikels durch den Austausch von Natrium hervorgerufene Druckspannung (auch als Natrium-CS bezeichnet). Es handelt sich hierbei um einen durch Extrapolation ermittelten Wert, da sich hier das Spannungsprofil, das auf den Austausch von Natriumionen zurückzuführen ist, und das auf den Austausch von Kalium beruhende Spannungsprofil überlagern. Der Punkt 203 zeigt stark schematisiert den Wert der auf dem Austausch von Natriumionen basierenden Druckspannung bei einer Glastiefe von 30 $\mu$m (Natrium-CS-30). Am Punkt 205 ist die Spannung im Glasartikel 0. Es handelt sich hierbei um die sogenannten Druckspannungstiefe für Natriumionen, auch als Natrium-DoL (oder auch nur als DoL) bezeichnet. Mit 204 ist das durch den Austausch von Natriumionen hervorgerufene Druckspannungsintegral bezeichnet.

Durch Extrapolation desjenigen Teils des Spannungsprofils 2 erhalten wird die Druckspannungstiefe für Kalium (Kalium-DoL), hier bezeichnet mit 206.

Schließlich ist mit 207 der Bereich des normierten Zugspannungsintegrals gekennzeichnet, also der in dem Glasartikel gespeicherten Zugspannung.

Unter dem "Kalium-DoL-Schnittpunkt" wird die Tiefe im Glasartikels an dem Punkt des Druckspannungsprofils verstanden, an welchem sich die Natrium-Druckspannungskurve und die Kalium-Druckspannungskurve sich schneiden. In Fig. 7 ist dieser Punkt mit der Bezugsziffer 208 gekennzeichnet.

Bezugszeichenliste

| | |
|---|---|
| 1 | Scheibenförmiger Glasartikel |
| 101 | Druckspannungszone |
| 102 | unter Zugspannung stehender innerer Bereich des Glasartikels |
| 2 | beispielhaftes Spannungsprofil eines vorgespannten LAS-Glasartikels |
| 201 | an der Oberfläche des Glasartikels erzeugte Druckspannung, im Wesentlichen Kalium-CS |
| 202 | Natrium-CS |
| 203 | auf dem Austausch von Natriumionen basierenden Druckspannung bei einer Glastiefe von 30 $\mu$m |
| 204 | Natrium-Druckspannungsintegral |
| 205 | Natrium-DoL, Druckspannungstiefe für Natriumionen |
| 206 | Druckspannungstiefe für Kaliumionen, Kalium-DoL |
| 207 | gespeicherte Zugspannung, normiertes Zugspannungsintegral |
| 208 | Na-CS-K-DoL-Schnittpunkt |

**Patentansprüche**

1. Chemisch vorgespannter, scheibenförmiger Glasartikel (1) mit einer Zusammensetzung umfassend die Komponenten $SiO_2$, $Al_2O_3$ sowie $Li_2O$, aufweisend mindestens eines der folgenden Merkmale:

- eine Austauschtiefe, vorzugsweise eine Natrium-Austauschtiefe, von mindestens 85 $\mu$m, bevorzugt mindestens 100 $\mu$m und besonders bevorzugt mindestens 115 $\mu$m bei Dicken des Glasartikels von mindestens 0,4 mm bis zu weniger als 0,55 mm, von mindestens 90 $\mu$m, bevorzugt mindestens 120 $\mu$m und besonders bevorzugt mindestens 125 $\mu$m für Dicken des Glasartikels von 0,55 mm bis zu weniger als 0,6 mm , von mindestens 100 $\mu$m, bevorzugt mindestens 125 $\mu$m und besonders bevorzugt mindestens 135 $\mu$m bei Dicken des Glasartikels von 0,6 mm bis zu weniger als 0,7, von mindestens 120 $\mu$m, bevorzugt mindestens 140 $\mu$m und besonders bevorzugt mindestens 160 $\mu$m bei Dicken des Glasartikels von 0,7 mm bis zu weniger als 1 mm und mindestens 170 $\mu$m bei einer Dicke des Glasartikels von 1 mm bis zu 3 mm, vorzugsweise bis zu 2 mm, und/oder
- eine speicherbare Zugspannung von höchstens -15 MPa, und vorzugsweise wenigstens - 45 MPa, vorzugsweise wenigstens -35 MPa, besonders bevorzugt wenigstens -30 MPa und ganz besonders bevorzugt von wenigstens -27,5 MPa, und/oder
- einen Netzwerkbildnergehalt von mindestens 82 Gew.-% und/oder
- einen Gehalt an Alkalioxiden von höchstens 12 Gew.-%, vorzugsweise höchstens 10 Gew.-%,
wobei der scheibenförmige Glasartikel (1) vorzugsweise **gekennzeichnet ist durch** eine Set-Drop-Festigkeit, gegeben als Fallhöhe in cm, wobei die Fallhöhe als Mittelwert von 15 Proben angegeben ist, von 50 bis 150 bei Verwendung einer Körnung von #60 (#60).

2. Chemisch vorgespannter, scheibenförmiger Glasartikel (1) mit einer Zusammensetzung umfassend die Komponenten $SiO_2$, $Al_2O_3$ sowie $Li_2O$,

vorzugsweise nach Anspruch 1,

erhältlich in einem Ionenaustausch eines Lithium-Alumosilikatglases, wobei

ein Ionenaustausch in einem Tauschbad umfassend zwischen mindestens 20 Gew.-%, und bis zu 100 Gew.-% eines Natriumsalzes, vorzugsweise Natriumnitrat $NaNO_3$, für eine Dauer von mindestens 2 Stunden, bevorzugt mindestens 4 Stunden, und höchstens 24 Stunden bei einer Temperaturzwischen mindestens 380°C und höchstens 440°C durchgeführt wird, wobei optional ein Kaliumsalz, insbesondere Kaliumnitrat, dem Tauschbad zugesetzt werden kann, insbesondere in der Form, dass die Summe des Gehalts von Natriumsalz und Kaliumsalz sich zu 100 % addieren,

sowie optional ein zweiter Ionenaustausch in einem Tauschbad umfassend zwischen 0 Gew.-% und 10 Gew.-% eines Natriumsalzes, vorzugsweise Natriumnitrat $NaNO_3$, bezogen auf die Gesamtmenge des Salzes, für eine Dauer von mindestens einer Stunde und höchstens 6 Stunden bei einer Temperatur des Tauschbades von mindestens 380°C und höchstens 440°C, wobei dem Tauschbad ein Kaliumsalz, insbesondere bevorzugt Kaliumnitrat $KNO_3$ zugesetzt wird, insbesondere in der Form, dass die Summe des Gehalts von Natriumsalz und Kaliumsalz sich zu 100 Gew.-% addieren,

wobei sich optional weitere Ionenaustauschschritte anschließen können.

3. Chemisch vorgespannter, scheibenförmiger Glasartikel (1) mit einer Zusammensetzung umfassend die Komponenten $SiO_2$, $Al_2O_3$ sowie $Li_2O$,

vorzugsweise nach einem der Ansprüche 1 oder 2,

mit einer Zusammensetzung umfassend die folgenden Komponenten in Gew.-%.

$SiO_2$ 57 bis 69, bevorzugt 59 bis 69, besonders bevorzugt 61 bis 69, wobei die Obergrenze jeweils vorzugsweise 67 sein kann,
$Al_2O_3$ 17 bis 25, bevorzugt 17 bis 21,
$B_2O_3$ 0 bis 7, bevorzugt 0 bis 5, besonders bevorzugt 0 bis 4,5,
$Li_2O$ 3 bis 5,5, bevorzugt 3,5 bis 5,5,
$Na_2O$ 0,8 bis 7, bevorzugt 0,8 bis 6, besonders bevorzugt 0,8 bis 5,5,

wobei vorzugsweise die Summe des Gehalts von $Al_2O_3$ und $SiO_2$, bezogen auf die Angabe in Gew.-%, zwischen mindestens 75 und höchstens 92, bevorzugt höchstens 90, liegt.

4. Glasartikel (1) nach einem der Ansprüche 1 bis 3, umfassend die folgenden Komponenten in Gew.-%:

$SiO_2$ 57 bis 69, bevorzugt 59 bis 69, besonders bevorzugt 61 bis 69, wobei die Obergrenze jeweils vorzugsweise 67 sein kann,
$Al_2O_3$ 17 bis 25, bevorzugt 17 bis 21,
$B_2O_3$ 0 bis 7, bevorzugt 0 bis 5, besonders bevorzugt 0 bis 4,5,
$Li_2O$ 3 bis 5,5, bevorzugt 3,5 bis 5,5,
$Na_2O$ 0,8 bis 7, bevorzugt 0,8 bis 6, besonders bevorzugt 0,8 bis 5,5,
$K_2O$ 0 bis 1, bevorzugt 0 bis 0,8, besonders bevorzugt 0 bis 0,7
$MgO$ 0 bis 2, bevorzugt 0 bis 1,5, besonders bevorzugt 0 bis 1,
$CaO$ 0 bis 4,5,
$SrO$ 0 bis 2, bevorzugt 0 bis 1,5, besonders bevorzugt 0 bis 1,
$ZnO$ 0 bis 3, bevorzugt 0 bis 2, besonders bevorzugt 0 bis 1,5,
$P_2O_5$ 0 bis 3, bevorzugt 0 bis 2, besonders bevorzugt 0 bis 1,7,
$ZrO_2$ 0 bis 3, bevorzugt 0 bis 2,

wobei weiterhin Verunreinigungen und/oder Läutermittel und/oder färbende Bestandteile in Mengen bis zu 2 Gew.-% enthalten sein können.

5. Glasartikel (1) nach einem der Ansprüche 1 bis 4, wobei die Dicke des Glasartikels (1) mindestens 0,4 mm und höchstens 3 mm beträgt.

6. Glasartikel (1) nach einem der Ansprüche 1 bis 5, wobei die Dicke des Glasartikels (1) mindestens 0,5 mm beträgt.

**7.** Glasartikel (1) nach einem der Ansprüche 1 bis 6, wobei die Dicke des Glasartikels (1) höchstens 2 mm, vorzugsweise höchstens 1 mm, beträgt.

**8.** Verwendung eines Glasartikels (1) nach einem der Ansprüche 1 bis 7 als Abdeckscheibe, insbesondere als Abdeckscheibe für Geräte der Unterhaltungselektronik, insbesondere für Anzeigeeinrichtungen, Bildschirme von Recheneinrichtungen, Messgeräten, TV-Geräten, insbesondere für Abdeckscheibe für mobile Geräte, insbesondere für zumindest ein Gerät aus der Gruppe, welche umfasst: mobile Endgeräte, mobile Datenverarbeitungsgeräte, insbesondere Mobiltelefone, mobile Rechner, Palmtops, Laptops, Tablet-Computer, Wearables, tragbare Uhren und Zeitmesseinrichtungen, oder als Schutzverglasung, insbesondere als Schutzverglasung für Maschinen, oder als Verglasung in Hochgeschwindigkeitszügen, oder als Sicherheitsverglasung, oder als Automobilverglasung, oder in Tauchuhren, oder in U-Booten, oder als Abdeckscheibe für explosionsgeschützte Geräte, insbesondere für solche, in denen der Einsatz von Glas zwingend vorgeschrieben ist.

**9.** Lithium-Aluminium-Silikatglas, umfassend die folgenden Komponenten in Gew.-%:

$SiO_2$ 57 bis 69, bevorzugt 59 bis 69, besonders bevorzugt 61 bis 69, wobei die Obergrenze jeweils vorzugsweise 67 sein kann,
$Al_2O_3$ 17 bis 25, bevorzugt 17 bis 21,
$B_2O_3$ 0 bis 7, bevorzugt 0 bis 5, besonders bevorzugt 0 bis 4,5,
$Li_2O$ 3 bis 5,5, bevorzugt 3,5 bis 5,5,
$Na_2O$ 0,8 bis 7, bevorzugt 0,8 bis 6, besonders bevorzugt 0,8 bis 5,5,

wobei vorzugsweise die Summe des Gehalts von $Al_2O_3$ und $SiO_2$, bezogen auf die Angabe in Gew.-%, zwischen mindestens 75 und höchstens 92, bevorzugt höchstens 90, liegt.

**10.** Glas nach Anspruch 9, umfassend die folgenden Komponenten in Gew.-%:

$SiO_2$ 57 bis 69, bevorzugt 59 bis 69, besonders bevorzugt 61 bis 69, wobei die Obergrenze jeweils vorzugsweise 67 sein kann,
$Al_2O_3$ 17 bis 25, bevorzugt 17 bis 21,
$B_2O_3$ 0 bis 7, bevorzugt 0 bis 5, besonders bevorzugt 0 bis 4,5,
$Li_2O$ 3 bis 5,5, bevorzugt 3,5 bis 5,5,
$Na_2O$ 0,8 bis 7, bevorzugt 0,8 bis 6, besonders bevorzugt 0,8 bis 5,5,
$K_2O$ 0 bis 1, bevorzugt 0 bis 0,8, besonders bevorzugt 0 bis 0,7,
MgO 0 bis 2, bevorzugt 0 bis 1,5, besonders bevorzugt 0 bis 1,
CaO 0 bis 4,5,
SrO 0 bis 2, bevorzugt 0 bis 1,5, besonders bevorzugt 0 bis 1,
ZnO 0 bis 3, bevorzugt 0 bis 2, besonders bevorzugt 0 bis 1,5,
$P_2O_5$ 0 bis 3, bevorzugt 0 bis 2, besonders bevorzugt 0 bis 1,7,
$ZrO_2$ 0 bis 3, bevorzugt 0 bis 2,

wobei weiterhin Verunreinigungen und/oder Läutermittel und/oder färbende Bestandteile in Mengen bis zu 2 Gew.-% enthalten sein können.

**11.** Verfahren zur Herstellung eines Glasartikels (1) nach einem der Ansprüche 1 bis 7, umfassend die Schritte

- einen Ionenaustausch in einem Tauschbad umfassend zwischen mindestens 20 Gew.-%, und bis zu 100 Gew.-% eines Natriumsalzes, vorzugsweise Natriumnitrat $NaNO_3$, für eine Dauer von mindestens 2 Stunden, bevorzugt mindestens 4 Stunden, und höchstens 24 Stunden bei einer Temperatur zwischen mindestens 380°C und höchstens 440°C durchgeführt wird, wobei optional ein Kaliumsalz, insbesondere Kaliumnitrat, dem Tauschbad zugesetzt werden kann, insbesondere in der Form, dass die Summe des Gehalts von Natriumsalz und Kaliumsalz sich zu 100 % addieren,
- sowie optional einen zweiten Ionenaustausch in einem Tauschbad umfassend zwischen 0 Gew.-% und 10 Gew.-% eines Natriumsalzes, vorzugsweise Natriumnitrat $NaNO_3$, bezogen auf die Gesamtmenge des Salzes, für eine Dauer von mindestens einer Stunde und höchstens 6 Stunden bei einer Temperatur des Tauschbades von mindestens 380°C und höchstens 440°C, wobei dem Tauschbad ein Kaliumsalz, insbesondere bevorzugt Kaliumnitrat $KNO_3$ zugesetzt wird, insbesondere in der Form, dass die Summe des Gehalts von Natriumsalz und Kaliumsalz sich zu 100 Gew.- % addieren,

- sowie optional einen oder mehrere weitere Ionenaustauschschritte.

**Gespeicherte Zugspannung vs. #60 set-drop-Festigkeit**

Fig. 1

**Minimal DoL in Abhängigkeit von der Korngröße**

Fig. 2

Fig. 3

Fig. 4

1

Fig. 5

1

101

DoL

102

Fig. 6

Fig. 7

Fig 8: Gesamtansicht des Set-Drop-Versuchsaufbaus mit Beschriftung der einzelnen Komponenten

Fig 9: Probenaufnahme und Auslösemechanismus des Set-Drop Versuchsaufbaus

Fig 10: Aluminiumgehäuse und Kunststoffplatte als Probenaufnahme und Probendummy

Fig 11: *Ausrichtung des Probendummys in der Probenaufnahme mittels 2D-Wasserwaage*

**Europäisches Patentamt**

**European Patent Office**

**Office européen des brevets**

## EUROPÄISCHER RECHERCHENBERICHT

**Nummer der Anmeldung**

EP 20 18 6868

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 1 593 658 A1 (SCHOTT AG [DE]) 9. November 2005 (2005-11-09) * Absatz [0072]; Anspruch 28; Tabellen 1,2 * | 1-11 | INV. C03C21/00 |
| X | US 2018/127302 A1 (GROSS TIMOTHY MICHAEL [US] ET AL) 10. Mai 2018 (2018-05-10) * Absätze [0002], [0003]; Tabellen 2,3 * | 1-11 | |
| X | US 2005/090377 A1 (SHELESTAK LARRY J [US] ET AL) 28. April 2005 (2005-04-28) * Absätze [0084], [0088]; Ansprüche 1,48; Tabellen 1,3 * | 1-6,8-11 | |

| | |
|---|---|
| | **RECHERCHIERTE SACHGEBIETE (IPC)** |
| | C03C |

Der vorliegende Recherchenbericht wurde für alle Patentansprüche erstellt

| Recherchenort | Abschlußdatum der Recherche | Prüfer |
|---|---|---|
| München | 14. Oktober 2020 | King, Ruth |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 18 6868

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-10-2020

| Im Recherchenbericht angeführtes Patentdokument | Datum der Veröffentlichung | Mitglied(er) der Patentfamilie | Datum der Veröffentlichung |
|---|---|---|---|
| EP 1593658 A1 | 09-11-2005 | AT 380164 T | 15-12-2007 |
| | | CN 1693247 A | 09-11-2005 |
| | | DE 102004022629 A1 | 15-12-2005 |
| | | EP 1593658 A1 | 09-11-2005 |
| | | JP 2005320234 A | 17-11-2005 |
| | | US 2005250639 A1 | 10-11-2005 |
| US 2018127302 A1 | 10-05-2018 | CN 110167894 A | 23-08-2019 |
| | | CN 110167895 A | 23-08-2019 |
| | | EP 3535219 A2 | 11-09-2019 |
| | | EP 3535220 A2 | 11-09-2019 |
| | | JP 2019532906 A | 14-11-2019 |
| | | JP 2019534234 A | 28-11-2019 |
| | | KR 20190078612 A | 04-07-2019 |
| | | KR 20190078626 A | 04-07-2019 |
| | | TW 201823175 A | 01-07-2018 |
| | | TW 201825427 A | 16-07-2018 |
| | | US 2018127302 A1 | 10-05-2018 |
| | | WO 2018085274 A2 | 11-05-2018 |
| | | WO 2018085278 A2 | 11-05-2018 |
| US 2005090377 A1 | 28-04-2005 | CN 1886348 A | 27-12-2006 |
| | | EP 1682458 A1 | 26-07-2006 |
| | | EP 2319812 A1 | 11-05-2011 |
| | | HK 1101509 A1 | 09-12-2011 |
| | | JP 4742046 B2 | 10-08-2011 |
| | | JP 2007527354 A | 27-09-2007 |
| | | JP 2010001216 A | 07-01-2010 |
| | | US 2005090377 A1 | 28-04-2005 |
| | | US 2009263662 A1 | 22-10-2009 |
| | | US 2010233407 A1 | 16-09-2010 |
| | | US 2011079048 A1 | 07-04-2011 |
| | | WO 2005042423 A1 | 12-05-2005 |

EPO FORM P0461

Für nähere Einzelheiten zu diesem Anhang : siehe Amtsblatt des Europäischen Patentamts, Nr.12/82

**EP 3 772 493 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190016632 A1
- US 959342 B2
- US 20180057401 A1
- US 10294151 B2
- US 20180029932 A
- US A1 A
- US 10259746 B2
- US 20170166478 A1
- US 9908811 B2
- US 20160122240 A1
- US 10239784 B2
- US 20160122239 A1
- US 10150698 B2
- US 20170295657 A1
- US 10271442 B2
- US 20100028607 A1
- US 8312739 B2
- US 20130224492 A1
- US 9359251 B2
- US 20160023944 A1
- US 9718727 B2
- US 20120052271 A1
- US 10227253 B2
- US 20150030840 A1
- US 20140345325 A1
- US 20160257605 A1
- US 9487434 B2
- US 20150239776 A1
- US 9517968 B2
- US 20150259244 A1
- US 9567254 B2
- US 20170036952 A1
- US 9676663 B2
- US 20180002223 A1
- US 10266447 B2
- US 20170129803 A1
- US 20160102014 A1
- US 20150368153 A1
- US 20150368148 A1
- US 9902648 B2
- US 20150239775 A1
- US 10118858 B2
- US 9908812 B2
- US 20160264452 A1
- US 2016102011 A1
- US 9593042 B2
- WO 2012126394 A1
- US 20140308526 A1
- US 9540278 B2

- US 20110294648 A1
- US 8759238 B2
- US 20100035038 A1
- US 8075999 B2
- US 4055703 A
- DE 102010009584 A1
- DE 102010009584 B4
- US 20160347655 A1
- US 10351471 B2
- CN 102690059 A
- CN 102690059 B
- US 20160356760 A1
- US 10180416 B2
- WO 2017049028 A1
- US 9897574 B2
- WO 2017087742 A1
- US 20170291849 A1
- US 10017417 B2
- US 20170022093 A1
- US 9701569 B2
- US 2017300088 A1
- US 9977470 B2
- EP 1593658 A1
- EP 1593658 B1
- US 20050250639 A1
- US 20180022638 A1
- US 10183887 B2
- US 20190152838 A1
- US 20130122284 A1
- US 9156724 B2
- US 20150079400 A1
- US 9714188 B2
- US 20150099124 A1
- US 9701574 B2
- WO 2019085422 A1
- US 20170197869 A1
- US 10131567 B2
- US 20150140325 A1
- US 10125044 B2
- US 20150118497 A1
- US 9822032 B2
- US 20120135852 A1
- US 8796165 B2
- US 20150147575 A1
- US 10000410 B2
- US 20150376050 A1
- US 9783451 B2
- DE 102018124785